(19) Europäisches Patentamt / European Patent Office / Office européen des brevets

(11) **EP 4 104 286 B1**

(12) **EUROPÄISCHE PATENTSCHRIFT**

(45) Veröffentlichungstag und Bekanntmachung des Hinweises auf die Patenterteilung:
**27.03.2024   Patentblatt 2024/13**

(21) Anmeldenummer: **20706989.9**

(22) Anmeldetag: **14.02.2020**

(51) Internationale Patentklassifikation (IPC):
*H02N 2/04* *(2006.01)*     *F15B 1/033* *(2006.01)*
*F15B 15/20* *(2006.01)*     *F15B 7/00* *(2006.01)*

(52) Gemeinsame Patentklassifikation (CPC):
**H02N 2/043; F15B 7/00;** F15B 2211/20515;
F15B 2211/2053; F15B 2211/212;
F15B 2211/30505; F15B 2211/31529

(86) Internationale Anmeldenummer:
**PCT/EP2020/053954**

(87) Internationale Veröffentlichungsnummer:
**WO 2021/160289 (19.08.2021 Gazette 2021/33)**

(54) **AKTORVORRICHTUNG SOWIE VERFAHREN ZUM BETREIBEN EINER SOLCHEN AKTORVORRICHTUNG**

ACTUATOR DEVICE AND METHOD FOR OPERATING AN ACTUATOR DEVICE OF THIS TYPE

DISPOSITIF ACTIONNEUR AINSI QUE PROCÉDÉ POUR FAIRE FONCTIONNER UN TEL DISPOSITIF ACTIONNEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.12.2022   Patentblatt 2022/51**

(73) Patentinhaber: **MetisMotion GmbH**
**81549 München (DE)**

(72) Erfinder:
• **BACHMAIER, Georg**
  **81549 Muenchen (DE)**
• **ZOELS, Wolfgang**
  **81549 Muenchen (DE)**
• **MCCLANAHAN, Christopher**
  **81549 Muenchen (DE)**
• **FROESE, Patrick**
  **81549 Muenchen (DE)**

(74) Vertreter: **Hofstetter, Schurack & Partner Patent- und Rechtsanwaltskanzlei PartG mbB Balanstrasse 57 81541 München (DE)**

(56) Entgegenhaltungen:
EP-A1- 3 490 017     EP-A1- 3 536 976
WO-A1-2015/164226     DE-A1-102009 043 034

**Beschreibung**

Die Erfindung betrifft eine Aktorvorrichtung sowie ein Verfahren zum Betreiben einer solchen Aktorvorrichtung.

Aktorvorrichtungen und Verfahren zum Betreiben von solchen Aktorvorrichtungen sind aus dem allgemeinen Stand der Technik bereits hinlänglich bekannt. Eine solche Aktorvorrichtung kann ein Antriebselement und ein Abtriebselement umfassen. Durch Bewegen des Antriebselements kann beispielsweise eine Bewegung des Abtriebselements bewirkt werden, sodass beispielsweise durch Bewegen des Abtriebselements wenigstens ein weiteres, zusätzlich zum Antriebselement und zusätzlich zu dem Abtriebselement vorgesehenes Bauelement bewegt werden kann. Zwischen dem Antriebselement und dem Abtriebselement kann eine, insbesondere fluidischen und ganz insbesondere hydraulische, Übersetzung vorgesehen sein. Durch die Übersetzung ist es möglich, dass beispielsweise zum Bewegen des Antriebselements eine erste Kraft auf das Antriebselement aufgebracht wird, wobei in der Folge das Abtriebselement eine gegenüber der ersten Kraft geringere oder größere zweite Kraft zum Bewegen des Bauelements bereitstellt. Alternativ oder zusätzlich ist es denkbar, dass sich das Abtriebselement dann, wenn zum Bewegen des Abtriebselements das Antriebselement bewegt wird, schneller oder langsamer als das Antriebselement bewegt. Hierdurch kann die Aktorvorrichtung bedarfsgerecht für unterschiedliche Anwendungsfälle verwendet werden.

Durch Bewegen des Abtriebselements und durch das daraus resultierende Bewegen des Bauelements ist es möglich, dass Abtriebselement beziehungsweise das Bauelement aus einer ersten Stellung in eine von der ersten Stellung unterschiedliche zweite Stellung zu bewegen und insbesondere in der zweiten Stellung zu halten. Um das Abtriebselement beziehungsweise das Bauelement in der zweiten Stellung zu halten, wird beispielsweise auf das Abtriebselement eine Haltekraft ausgeübt beziehungsweise das Abtriebselement übt auf das Bauelement eine Haltekraft aus. Dabei kann es wünschenswert sein, eine schnelle Bewegung des Bauelements beziehungsweise des Abtriebselements aus der zweiten Stellung in die erste Stellung oder in Richtung der ersten Stellung zuzulassen. Hierzu ist es wünschenswert, das Ausüben beziehungsweise Bereitstellen der Haltekraft möglichst schnell, das heißt in kurzer Zeit zu beenden.

Aufgabe der vorliegenden Erfindung ist es daher, eine Aktorvorrichtung und ein Verfahren zum Betreiben einer solchen Aktorvorrichtung zu schaffen, sodass mittels der Aktorvorrichtung wenigstens ein Bauelement besonders vorteilhaft bewegt werden kann.

Diese Aufgabe wird durch eine Aktorvorrichtung mit den Merkmalen des Patentanspruchs 1 sowie durch ein Verfahren mit den Merkmalen des Patentanspruchs 15 gelöst. Vorteilhafte Ausgestaltungen mit zweckmäßigen Weiterbildungen der Erfindung sind in den übrigen Ansprüchen angegeben.

Ein erster Aspekt der Erfindung betrifft eine Aktorvorrichtung, welche wenigstens ein Abtriebselement aufweist. Das Abtriebselement ist mit einem Fluid, insbesondere mit einem Gas oder einer Flüssigkeit, insbesondere einer möglichst beziehungsweise zumindest im Wesentlichen inkompressiblen Flüssigkeit, beaufschlagbar und dadurch in wenigstens eine Haltestellung bewegbar. Mit anderen Worten kann beispielsweise das Abtriebselement durch Beaufschlagen des Abtriebselements mit dem Fluid aus einer Ausgangsstellung in die von der Ausgangsstellung unterschiedliche Haltestellung bewegt werden, insbesondere translatorisch und/oder in eine Bewegungsrichtung. Das Abtriebselement kann beispielsweise ein Abtriebskolben sein, welcher beispielsweise translatorisch bewegbar in einem Abtriebsgehäuse, insbesondere in einem Abtriebszylinder, aufgenommen ist. Durch Beaufschlagen des Abtriebskolbens mit dem Fluid kann der Abtriebskolben, insbesondere translatorisch und/oder in die Bewegungsrichtung, relativ zu dem Abtriebszylinder, insbesondere aus der Ausgangsstellung, in die Haltestellung bewegt werden. Hierzu wird beispielsweise das Fluid in den Abtriebszylinder, insbesondere in eine teilweise durch den Abtriebszylinder und teilweise durch den Abtriebskolben begrenzte Abtriebskammer, eingeleitet. Ferner ist es denkbar, dass das Abtriebselement eine Wandung, insbesondere ein Boden, eines Falten- oder Federbalgs ist. Beispielsweise wird das Fluid in den Faltenbalg eingeleitet, wodurch das Abtriebselement, insbesondere translatorisch und/oder in die Bewegungsrichtung, bewegt wird, insbesondere relativ zu einer weiteren Wand, insbesondere zu einer weiteren Seitenwand, des Faltenbalgs. Hierdurch wird der Faltenbalg beispielsweise gelenkt.

Die Aktorvorrichtung weist außerdem wenigstens einen Aktor auf, welcher vorzugsweise elektrisch betreibbar ist. Der Aktor ist durch Ansteuern des Aktors in einem Pumpbetrieb betreibbar. Unter dem Ansteuern des Aktors kann insbesondere dann, wenn der Aktor elektrisch betreibbar ist, verstanden werden, dass elektrische Energie, insbesondere elektrischer Strom oder elektrische Spannung, an den Aktor angelegt wird. Hierunter kann insbesondere verstanden werden, dass der Aktor mit der elektrischen Energie beziehungsweise mit der elektrischen Spannung versorgt wird. Der Aktor ist beispielsweise ein Linearaktor. Insbesondere kann der Aktor ein Festkörperaktor wie beispielsweise ein Piezoaktor sein. Es ist ferner denkbar, dass der Aktor als ein anderer Festkörperaktor wie beispielsweise als ein Solenoid oder Polymeraktor ausgebildet ist. In dem Pumpbetrieb ist zumindest ein Teil des Aktors durch das Ansteuern des Aktors abwechselnd in eine erste Richtung und in eine der ersten Richtung entgegengesetzte zweite Richtung, insbesondere translatorisch, bewegbar, wodurch zum Beaufschlagen des Abtriebselements mit dem Fluid das Fluid zu dem Abtriebselement förderbar, insbesondere in die Abtriebskammer hineinförderbar, ist.

Bei dem Teil des Aktors kann es sich beispielsweise um einen auch als Läufer bezeichneten Anker handeln, welcher beispielsweise durch das Ansteuern des Aktors hin- und her bewegt wird. Ist der Aktor beispielsweise ein Festkörperaktor, insbesondere ein Piezoaktor, so wird beispielsweise durch das Ansteuern des Aktors bewirkt, dass sich der Aktor abwechselnd ausdehnt beziehungsweise längt und zusammenzieht beziehungsweise längenverkürzt. Bei dem Ausdehnen beziehungsweise Längen des Aktors bewegt sich beispielsweise zumindest der Teil des Aktors in die erste Richtung, und bei dem Längenverkürzen des Aktors bewegt sich beispielsweise zumindest der Teil des Aktors in die zweite Richtung.

Die Aktorvorrichtung weist außerdem wenigstens einem Abführkanal auf, über welchen das Fluid, insbesondere nachdem das Abtriebselement mit dem Fluid beaufschlagt wurde, von dem Abtriebselement abführbar ist. Beispielsweise kann das Fluid, insbesondere nachdem das Fluid in die Abtriebskammer eingeleitet wurde und somit nachdem das Abtriebselement mit dem Fluid beaufschlagt wurde, mittels des Abführkanals aus der Abtriebskammer abgeführt und somit von dem Abtriebselement abgeführt werden. Hierzu ist beispielsweise der Abführkanal fluidisch mit der Abtriebskammer verbunden.

Die Aktorvorrichtung weist außerdem eine Ventileinrichtung auf, welche zwei Ventilelemente umfasst, die relativ zueinander bewegbar sind, wodurch die Ventileinrichtung zwischen wenigstens einem Schließzustand und wenigstens einem Offenzustand verstellbar beziehungsweise umschaltbar ist. Insbesondere können die Ventilelemente beispielsweise translatorisch relativ zueinander bewegt werden, um dadurch die Ventileinrichtung zwischen dem Schließzustand und dem Offenzustand zu verstellen beziehungsweise umzuschalten. In dem Schließzustand ist der Abführkanal mittels der Ventileinrichtung, insbesondere fluidisch, versperrt, sodass in dem Schließzustand kein Fluid durch die Abführleitung hindurchströmen kann beziehungsweise sodass in dem Schließzustand kein Fluid, insbesondere mittels des Abführkanals, aus der Abtriebskammer beziehungsweise von dem Abtriebselement abführbar ist beziehungsweise abgeführt wird. Somit ist in dem Schließzustand unter Versperren des Abführkanals das Abtriebselement durch das Fluid in der Haltestellung zu halten. Mit anderen Worten, wird beispielsweise in dem Pumpbetrieb das Fluid mittels des Aktors, insbesondere in die Abtriebskammer, gepumpt, während sich die Ventileinrichtung in ihrem Schließzustand befindet, so wird hierdurch das Abtriebselement mit dem Fluid beaufschlagt, während sich die Ventileinrichtung in dem Schließzustand befindet, und dadurch wird mit fortschreitendem und mittels des Aktors bewirktem Pumpen des Fluids das Abtriebselement, insbesondere sukzessive, in die Haltestellung bewegt. Wird daraufhin beispielsweise das Pumpen beendet, während die Ventileinrichtung noch in dem Schließzustand ist, so wird das Abtriebselement mittels des sich in der Abtriebskammer befindenden beziehungsweise das Abtriebselement beaufschlagenden Fluids, welches zuvor mittels des Aktors gepumpt wurde, in der Haltestellung gehalten, da beispielsweise der Abführkanal mittels der Ventileinrichtung versperrt und dadurch ein Abführen des Fluids aus der Abtriebskammer beziehungsweise von dem Abtriebselement unterbunden wird. Wieder mit anderen Worten ausgedrückt übt das Fluid beispielsweise dadurch, dass es mittels des Aktors gepumpt wird, derart, dass das Abtriebselement mit dem Fluid beaufschlagt wird, eine Antriebskraft auf das Abtriebselement aus, welches mittels der Antriebskraft in die Haltestellung bewegbar ist beziehungsweise bewegt wird, insbesondere entgegen eine Gegenkraft, die beispielsweise auf das Abtriebselement wirkt und der Bewegungskraft entgegengesetzt ist. Da dabei der Abführkanal mittels der Ventileinrichtung geschlossen ist, wird das Abtriebselement mittels des Fluids entgegen der Gegenkraft in der Haltestellung gehalten, nachdem das Pumpen beendet wurde und während das Pumpen unterbleibt. Wieder mit anderen Worten ausgedrückt führt die Gegenkraft nicht dazu, dass das Abtriebselement aus der Haltestellung zurück in die Ausgangsstellung beziehungsweise in Richtung der Ausgangsstellung bewegt wird, und die Gegenkraft führt nicht dazu, dass das Fluid aus der Abtriebskammer herausströmt beziehungsweise über den Abführkanal von dem Abtriebselement abgeführt wird.

In dem Offenzustand jedoch gibt die Ventileinrichtung den Abführkanal frei, sodass in dem Offenzustand der Abführkanal freigegeben ist. Somit lassen die Ventilelemente und somit die Ventileinrichtung in dem Offenzustand ein Abführen des Fluids von dem Abtriebselement beziehungsweise aus der Abtriebskammer über den Abführkanal zu, wodurch in dem Offenzustand die Ventilelemente eine Bewegung des Abtriebselements aus der Haltestellung in wenigstens eine von der Haltestellung unterschiedliche Ausweichstellung zulassen. Im Zuge der Bewegung des Abtriebselements aus der Haltestellung in die Ausweichstellung bewegt sich das Abtriebselement beispielsweise in die Ausgangsstellung oder in Richtung der Ausgangsstellung, sodass beispielsweise die Ausweichstellung die Ausgangsstellung ist, oder sodass die Ausweichstellung zwischen der Haltestellung und der Ausgangsstellung liegt.

Wird somit beispielsweise das Pumpen beendet und die Ventileinrichtung insbesondere während einer Zeitspanne noch in dem Schließzustand gehalten, so unterbleibt während der Zeitspanne eine Bewegung des Abtriebselements beziehungsweise während der Zeitspanne befindet sich das Abtriebselement in der Haltestellung, in welcher das Abtriebselement mittels des Fluids während der Zeitspanne gehalten wird. Wird beispielsweise nach der Zeitspanne die Ventileinrichtung von dem Schließzustand in den Offenzustand verstellt, so führt beispielsweise die Gegenkraft dazu, dass das Abtriebselement aus der Haltestellung in die Ausweichstellung bewegt wird, da das Fluid über den Abführkanal von dem Abtriebselement abführbar ist. Beispielsweise wird zumindest ein Teil des zunächst in der Abtriebskammer aufgenommenen Fluids mittels des sich aus der Haltestellung in die Ausweichstellung bewegenden Abtriebselements über den Abführkanal aus der Arbeitskammer herausbewegt, insbesondere herausgedrückt.

Durch Einstellen des Schließzustands kann somit das Abtriebselement in die Haltestellung bewegt und in der Haltestellung gehalten werden. Durch Einstellen des Offenzustands kann eine Bewegung des Abtriebselements aus der Haltestellung in die Ausweichstellung zugelassen werden, da dadurch beispielsweise das Fluid über den Abführkanal aus der Abtriebskammer abgeführt beziehungsweise von dem Abtriebselement abgeführt werden und das Abtriebselement nicht mehr entgegen der Gegenkraft in der Haltestellung halten kann.

Die Aktorvorrichtung ist dabei derart ausgebildet, dass durch Bewegen des Teils des Aktors in die erste Richtung ein erstes der Ventilelemente in eine erste Betätigungsrichtung, insbesondere translatorisch, bewegbar, und dadurch auf das zweite Ventilelement zu bewegbar ist, wodurch die Ventileinrichtung, insbesondere von dem Offenzustand, in den Schließzustand verstellbar ist. Beispielsweise fällt die erste Betätigungsrichtung mit der ersten Richtung zusammen beziehungsweise die erste Betätigungsrichtung verläuft parallel zu der ersten Richtung. Ferner ist es denkbar, dass die erste Betätigungsrichtung schräg oder senkrecht zu der ersten Richtung verläuft oder die erste Betätigungsrichtung ist der ersten Richtung entgegengesetzt.

Beispielsweise ist der Teil des Aktors mit dem ersten Ventilelement zumindest mittelbar, insbesondere direkt, und zumindest vorübergehend, insbesondere permanent, bewegungsgekoppelt, sodass dann, wenn der Teil des Aktors in die erste Richtung bewegt wird, das erste Ventilelement in die erste Betätigungsrichtung bewegt wird. Fernes ist es denkbar, dass der Teil des Aktors während seiner Bewegung in die erste Richtung zumindest vorübergehend an dem ersten Ventilelement in die erste Richtung zumindest mittelbar abgestützt oder abstützbar ist, sodass dann wenn der Teil in die erste Richtung bewegt wird, das erste Ventilelement in die erste Betätigungsrichtung, insbesondere in die erste Richtung, bewegt wird. Hierdurch kann beispielsweise ausgehend von dem Offenzustand das erste Ventilelement auf das zweite Ventilelement zubewegt werden, wodurch die Ventileinrichtung von dem Offenzustand in den Schließzustand verstellbar ist beziehungsweise verstellt wird. Beispielsweise sind in dem Offenzustand die Ventilelemente voneinander beabstandet, sodass dann beispielsweise das Fluid zwischen den Ventilelementen hindurchströmen kann beziehungsweise sodass dann der Abführkanal, in welchem beispielsweise die Ventileinrichtung beziehungsweise die Ventilelemente angeordnet sein kann beziehungsweise sein können, freigegeben ist. In dem Schließzustand liegen die Ventilelemente beispielsweise, insbesondere direkt, aneinander an, sodass die Ventilelemente gegeneinander abgedichtet sind und in der Folge den Abführkanal versperren. Mit anderen Worten kann beispielsweise in dem Schließzustand kein Fluid zwischen den Ventilelementen hindurchströmen, wodurch beispielsweise in dem Schließzustand mittels der Ventilelemente der Abführkanal fluidisch versperrt ist.

Die Aktorvorrichtung ist außerdem derart ausgebildet, dass durch Bewegen des Teils in die zweite Richtung eine Bewegung des ersten Ventilelements in eine der ersten Betätigungsrichtung entgegengesetzte zweite Betätigungsrichtung von dem zweiten Ventilelement weg bewirkbar ist, wodurch die Ventileinrichtung, insbesondere aus dem Schließzustand, in den Offenzustand verstellbar ist. Die zweite Betätigungsrichtung fällt beispielsweise mit der zweiten Richtung zusammen oder verläuft parallel zur zweiten Richtung. Ferner ist es denkbar, dass die zweite Betätigungsrichtung schräg oder senkrecht zur zweiten Richtung verläuft oder der zweiten Rückstelleinrichtung entgegengesetzt ist. Insbesondere verlaufen die Betätigungsrichtungen parallel zueinander und sind einander entgegengesetzt. Mit anderen Worten, wird der Teil des Aktors in die zweite Richtung bewegt, so wird dadurch eine Bewegung des zweiten Ventilelements in die zweite Betätigungsrichtung bewirkt oder zugelassen, wodurch sich das zweite Ventilelement von dem ersten Ventilelement wegbewegt. Hierdurch wird die Ventileinrichtung geöffnet. Unter dem Merkmal, dass durch Bewegen des Teils des Aktors in die zweite Richtung eine beziehungsweise die Bewegung des ersten Ventilelements in die zweite Betätigungsrichtung von dem zweiten Ventilelement weg bewirkbar ist, kann insbesondere verstanden werden, dass beispielsweise durch Bewegen des Teils in die zweite Richtung eine beziehungsweise die Bewegung des ersten Ventilelements in die zweite Betätigungsrichtung und von dem zweiten Ventilelement weg zugelassen wird, oder die Bewegung des ersten Ventilelements in die zweite Betätigungsrichtung von dem ersten Ventilelement weg wird aktiv bewirkt, insbesondere derart, dass das erste Ventilelement mit dem Teil, insbesondere in die erste Betätigungsrichtung und/oder in die zweite Betätigungsrichtung mitbewegbar ist. Insbesondere kann eine Betätigungseinrichtung wie beispielsweise eine Feder vorgesehen sein, mittels welcher beispielsweise infolge der in die zweite Richtung erfolgenden Bewegung des Teils das erste Ventilelement in die zweite Bewegungsrichtung bewegbar ist. Beispielsweise ist es denkbar, dass das erste Ventilelement mit dem Teil des Aktors, insbesondere starr, bewegungsgekoppelt ist, sodass beispielsweise dann, wenn der Teil des Aktors mit einer ersten Geschwindigkeit und/oder einem ersten Weg in die erste Richtung beziehungsweise in die zweite Richtung bewegt wird, hierdurch das erste Ventilelement mit einer zweiten Geschwindigkeit und/oder einem zweiten Weg in die erste Betätigungsrichtung beziehungsweise in die zweite Betätigungsrichtung mitbewegt wird, wobei die zweite Geschwindigkeit der ersten Geschwindigkeit entspricht und/oder wobei der zweite Weg dem ersten Weg entspricht.

Die Aktorvorrichtung ist dazu ausgebildet, in dem Pumpbetrieb den Teil des Aktors abwechselnd in die erste Richtung und in die zweite Richtung derart zu bewegen, dass in dem Pumpbetrieb nach einem, insbesondere anfänglichen Verstellen der Ventileinrichtung in den Schließzustand die Ventileinrichtung trotz des in dem Pumpbetrieb stattfindenden, abwechselnden Bewegens des ersten Teils in die erste Richtung und in die zweite Richtung in dem Schließzustand verbleibt, wodurch in dem Pumpbetrieb das Fluid zu dem Abtriebselement förderbar ist beziehungsweise gefördert wird. Mit anderen Worten wird zumindest Teil des Aktors in dem Pumpbetrieb derart abwechseln in die erste Richtung und in die zweite Richtung bewegt, dass in dem Pumpbetrieb nach einem anfänglichen Verstellen der Ventileinrichtung, insbesondere aus dem Offenzustand in den Schließzustand, die Ventileinrichtung trotz des in dem Pumpbetrieb stattfindenden, abwechselnden Bewegens des ersten Teils verbleibt, obwohl beispielsweise - wie zuvor beschrieben - das erste Ventilelement mit dem Teil bewegungsgekoppelt ist. Obwohl sich somit beispielsweise das erste Ventilelement mit dem Teil des Aktors abwechselnd in die erste Richtung und in die zweite Richtung hin- und her bewegt, verbleibt die Ventileinrichtung geschlossen beziehungsweise bleiben beispielsweise die Ventilelemente aneinander anliegend, sodass der Abführkanal versperrt ist und bleibt und sodass in dem Pumpbetrieb das Fluid zu dem Abtriebselement und insbesondere in die Abtriebskammer förderbar und insbesondere das Abtriebselement in dem Pumpbetrieb und mittels der Pumpbetriebs, insbesondere aus der Ausgangsstellung, in die Haltestellung bewegbar ist beziehungsweise bewegt wird.

Die Aktorvorrichtung ist dabei in einem von dem Pumpbetrieb unterschiedlichen und sich beispielsweise an den Pumpbetrieb anschließenden Öffnungsbetrieb betreibbar, in welchem eine in die zweite Richtung erfolgende Bewegung des Teils des Aktors zu einer in die zweite Betätigungsrichtung und von dem zweiten Ventilelement weg verlaufenden Bewegung des ersten Ventilelements und dadurch zu einem Verstellen der Ventileinrichtung aus dem Schließzustand in den Offenzustand führt. Mit anderen Worten führt der Öffnungsbetrieb zu einem Öffnen der Ventileinrichtung und somit dazu, dass das Abtriebselement beispielsweise der Gegenkraft ausweichen und sich in der Folge aus der Haltestellung in die Ausweichstellung bewegen kann beziehungsweise bewegt. Insbesondere ist es vorgesehen, dass in dem Pumpbetrieb eine Relativbewegung zwischen den Ventilelementen unterbleibt, sodass in dem Pumpbetrieb die Ventileinrichtung geschlossen bleibt.

Mittels der Aktorvorrichtung ist es zum einen möglich, in dem Pumpbetrieb das Abtriebselement, insbesondere aus der Ausgangsstellung, in die Haltestellung zu bewegen, insbesondere über eine beispielsweise durch das Fluid bewirkbare oder bewirkte Übersetzung zwischen dem Teil und dem Abtriebselement. Wird dann das Pumpen beziehungsweise der Pumpbetrieb beendet, während die Ventileinrichtung geschlossen bleibt, so kann mittels des Fluids das Abtriebselement in der Haltestellung gehalten werden. Zum anderen ermöglicht die Aktorvorrichtung ein besonders schnelles Verstellen der Ventileinrichtung aus dem Schließzustand in den Offenzustand, insbesondere einzig und allein durch entsprechendes Ansteuern des Aktors beziehungsweise durch Variieren des Ansteuerns des Aktors. Wird somit beispielsweise der Aktor auf eine erste Art angesteuert, so wird der Pumpbetrieb bewirkt. Wird der Aktor dann beispielsweise auf eine von der ersten Art unterschiedliche zweite Art angesteuert, so wird von dem Pumpbetrieb in den Öffnungsbetrieb gewechselt und ein Öffnen der Ventileinrichtung kann besonders schnell bewirkt werden. Ist somit beispielsweise zunächst die Ventileinrichtung geschlossen, sodass zunächst das Abtriebselement mittels des Fluids in der Haltestellung gehalten wird, und kommt es dann beispielsweise zu einer Situation, aufgrund derer besonders schnell eine Bewegung des Aktors aus der Haltestellung in die Ausweichstellung erfolgen soll, so kann besonders schnell ein Verstellen der Ventileinrichtung aus dem Schließzustand in den Offenzustand bewirkt werden. Beispielsweise wird die Ventileinrichtung derart in dem Schließzustand gehalten, dass eine zumindest im Wesentlichen konstante, elektrische Spannung an den Aktor angelegt wird beziehungsweise dass der Aktor zumindest im Wesentlichen konstant beziehungsweise kontinuierlich mit einer, insbesondere hinreichend hohen, elektrischen Spannung versorgt wird. Der Pumpbetrieb wird beispielsweise derart bewirkt, dass der Aktor derart angesteuert wird, dass abwechselnd eine erste elektrische Spannung und eine gegenüber der ersten elektrischen Spannung geringere zweite elektrische Spannung, welche auch Null sein kann, an den Aktor angelegt werden. Wird hinreichen schnell zwischen der ersten Spannung und der zweiten Spannung abgewechselt, so kann der Pumpbetrieb bewirkt werden, während die Ventileinrichtung in dem Schließzustand verbleibt beziehungsweise gehalten wird. Wird beispielsweise die elektrische Spannung, welche zum Halten des Abtriebselements in der Haltestellung an den Aktor zumindest im Wesentlichen kontinuierlich angelegt wird, abgebaut, ohne dass der Aktor daraufhin wieder so angesteuert wird, dass der Pumpbetrieb bewirkt wird, so kann dadurch die Ventileinrichtung besonders schnell geöffnet werden.

Um beispielsweise den Pumpbetrieb und den Öffnungsbetrieb besonders vorteilhaft realisieren zu können, umfasst die Aktorvorrichtung in einer vorteilhaften Ausgestaltung eine, beispielsweise zumindest mit dem ersten Ventilelement gekoppelte, Dämpfereinrichtung, welche vorzugsweise als ein nicht-linearer Dämpfer ausgebildet ist. Unter einem nicht-linearen Dämpfer ist beispielsweise Folgendes zu verstehen: Wird beispielsweise auf den Dämpfer eine erste Betätigungskraft ausgeübt, so wird dadurch beispielsweise der Dämpfer längenverkürzt beziehungsweise gestaucht oder komprimiert. Wird beispielsweise auf den Dämpfer eine der ersten Betätigungskraft entgegengesetzte zweite Betätigungskraft ausgeübt, so wird dadurch beispielsweise der Dämpfer verlängert, das heißt gelängt beziehungsweise expandiert. Die Dämpfereinrichtung ist beispielsweise insbesondere dadurch ein nicht-linearer Dämpfer beziehungsweise der nicht-lineare Dämpfer zeichnet sich insbesondere dadurch aus, dass beispielsweise dann, wenn die erste Betätigungskraft der zweiten Betätigungskraft betragsmäßig entspricht, der Dämpfer mit einer ersten Geschwindigkeit längenverkürzt und mit einer von der ersten Geschwindigkeit unterschiedlichen, zweiten Geschwindigkeit expandiert wird. Mit anderen Worten führen die Betätigungskräfte, obwohl sie betragsmäßig gleich sind, zu unterschiedlichen Geschwindigkeiten, mit denen der Dämpfer längenverkürzt beziehungsweise expandiert wird. Andersherum betrachtet muss beispielsweise dann, wenn der Dämpfer mit der gleichen Geschwindigkeit expandiert und längenverkürzt werden soll, die zweite Betätigungskraft von der ersten Betätigungskraft unterschiedlich und somit größer oder kleiner als die erste Betätigungskraft sein. Es ist erkennbar, dass der Dämpfer bei seinem Expandieren auf Zug, das heißt mit einer Zugkraft belastet wird, wobei der Dämpfer bei seinem Längenverkürzen auf Druck beziehungsweise mit einer Druckkraft beansprucht wird. Sowohl beim Expandieren als auch beim Längenverkürzen bewirkt der Dämpfer eine Dämpfung, wobei die Dämpfung beim Expandieren als Zugstufe und die Dämpfung beim Längenverkürzen als Druckstufe bezeichnet wird. Da der Dämpfer beispielsweise ein nicht-linearer Dämpfer ist, ist die Zugstufe härter oder weicher als die Druckstufe. Mit anderen Worten ist die Dämpfung beim Expandieren des Dämpfers stärker oder weniger stark als beim Längenverkürzen des Dämpfers. Wieder mit anderen Worten ausgedrückt stellt der Dämpfer aufgrund seiner Nicht-Linearität beim Expandieren des Dämpfers eine erste Dämpfung beziehungsweise eine erste Dämpfungswirkung und beim Längenverkürzen des Dämpfers eine von der ersten Dämpfung unterschiedliche, zweite Dämpfung beziehungsweise zweite Dämpfungswirkung bereit. Wieder mit anderen Worten ausgedrückt: Wird beispielsweise der nicht-lineare Dämpfer mit einer ersten Geschwindigkeit expandiert, so führt dies zu einer ersten Dämpfungskraft. Wird der Dämpfer mit einer zweiten Geschwindigkeit Längenverkürzt, das heißt komprimiert, so führt dies beispielsweise zu einer zweiten Dämpfungskraft. Da der Dämpfer nun nicht-linear ist, ist dann, wenn die erste Geschwindigkeit der zweiten Geschwindigkeit beziehungsweise umgekehrt entspricht, die erste Dämpfungskraft größer oder kleiner als die zweite Dämpfungskraft, insbesondere im Hinblick auf die hinlänglich bekannte Formel:

$$F_d = dv$$

Dabei bezeichnet $F_d$ die jeweilige Dämpfungskraft, v die jeweilige Geschwindigkeit, mit welcher der Dämpfer expandiert beziehungsweise komprimiert wird, und d eine beziehungsweise die Dämpfungskonstante des Dämpfers. Der Dämpfer weist somit beispielsweise für seine Zugstufe eine erste Dämpfungskonstante und für seine Druckstufe eine von der ersten Dämpfungskonstante unterschiedliche zweite Dämpfungskonstante auf, welche beispielsweise größer oder kleiner als die erste Dämpfungskonstante ist.

Die Dämpfereinrichtung lässt bei einer zum Beginnen des Pumpbetriebs vorgesehenen, insbesondere anfänglichen, ersten Bewegung des Teils des Aktors in die erste Richtung eine Bewegung des ersten Ventilelements in die erste Betätigungsrichtung auf das zweite Ventilelement zu, wodurch die Dämpfereinrichtung das Verstellen der Ventileinrichtung aus dem Offenzustand in den Schließzustand zulässt. Bei einer darauffolgenden Bewegung des Teils in die zweite Richtung verhindert die Dämpfereinrichtung eine ein Verstellen der Ventileinrichtung in den Offenzustand bewirkende Bewegung des ersten Ventilelements in die zweite Betätigungsrichtung von dem zweiten Ventilelement weg, insbesondere zumindest vorübergehend, wodurch die Dämpfereinrichtung die Ventileinrichtung in dem Schließzustand hält. Hierdurch ist in dem Pumpbetrieb der Teil des Aktors abwechselnd in die erste Richtung und in die zweite Richtung bewegbar, während die Ventileinrichtung in dem Schließzustand verbleibt. Durch diese Ausführungsform kann die Ventileinrichtung besonders einfach und insbesondere lediglich durch entsprechendes Ansteuern des Aktors beziehungsweise durch entsprechende Variation der Ansteuerung des Aktors geöffnet und geschlossen, das heißt zwischen dem Offenzustand und dem Schließzustand umgeschaltet werden.

Dabei hat es sich als besonders vorteilhaft gezeigt wenn dadurch, dass die Dämpfereinrichtung in dem Pumpbetrieb eine ein Verstellen der Ventileinrichtung in den Offenzustand bewirkende Bewegung des ersten Ventilelements in die zweite Betätigungsrichtung von dem zweiten Ventilelement weg verhindert und dadurch die Ventileinrichtung in dem Schließzustand hält, der Teil des Aktors und dadurch die Ventilelemente, insbesondere gemeinsam, abwechselnd in die erste Betätigungsrichtung und in die zweite Betätigungsrichtung bewegbar sind, während die Ventileinrichtung in dem Schließzustand verbleibt und vorzugsweise während eine Relativbewegung zwischen den Ventilelementen unterbleibt. Mit anderen Worten ist die Dämpfereinrichtung insbesondere in Form eines beziehungsweise des nicht-linearen Dämpfers und dabei insbesondere im Hinblick auf die Zugstufe beispielsweise steifer als im Hinblick auf die Druckstufe, sodass beispielsweise in dem Pumpbetrieb die Dämpfereinrichtung und die Ventilelemente als Block mit dem Teil des Aktors hin- und her bewegt werden, ohne dass eine Relativbewegung zwischen den Ventilelementen erfolgt, das heißt ohne dass die Ventileinrichtung aus dem Schließzustand in den Offenzustand verstellt wird.

Eine weitere Ausführungsform zeichnet sich dadurch aus, dass die Dämpfereinrichtung dazu ausgebildet ist, in dem Öffnungsbetrieb eine entlang der ersten Betätigungsrichtung und/oder entlang der zweiten Betätigungsrichtung erfolgende und eine Verstellung der Ventileinrichtung aus dem Schließzustand in den Offenzustand bewirkende Relativbewegung zwischen den Ventilelementen zuzulassen. Wird beispielsweise die elektrische Spannung, welche an den Aktor angelegt wird, um das Abtriebselement in der Haltestellung zu halten, hinreichend langsam abgebaut beziehungsweise derart abgebaut, dass ein den Pumpbetrieb bewirkendes Ansteuern des Aktors unterbleibt, so wird beispielsweise dem nicht-linearen Dämpfer ausreichend Zeit gegeben, um sich trotz seiner harten beziehungsweise steifen Zugstufe zu entspannen und in der Folge eine solche Relativbewegung zwischen den Ventilelementen zu bewirken, dass die Ventilelemente voneinander weg bewegt werden beziehungsweise sodass die Ventileinrichtung geöffnet wird. Dies erfolgt beispielsweise dadurch, dass ein Ansteuern des Aktors beziehungsweise eine Versorgung des Aktors mit elektrischer Energie, insbesondere mit elektrischer Spannung oder Strom, unterbleibt beziehungsweise wenn dies eine lange Zeit unterbleibt.

Bei einer weiteren, besonders vorteilhaften Ausführungsform der Erfindung weist die Aktorvorrichtung einen Anschlag auf, wobei die Ventilelemente und der Teil des Aktors entlang der ersten Richtung und entlang der zweiten Richtung relativ zu dem Anschlag bewegbar sind. Mit Hilfe des Anschlags kann eine besonders schnelle Öffnung der Ventileinrichtung auf besonders einfache Weise bewirkt werden.

Eine weitere Ausführungsform zeichnet sich dadurch aus, dass die Dämpfereinrichtung ein mit dem ersten Ventilelement mitbewegbares, insbesondere mit dem Ventilelement starr gekoppeltes, erstes Dämpferelement und ein relativ zu dem ersten Dämpferelement, insbesondere translatorisch, bewegbares zweites Dämpferelement aufweist. Beim Expandieren und Komprimieren des Dämpfers werden die Dämpferelemente beispielsweise relativ zueinander, insbesondere translatorisch, bewegt, insbesondere derart, dass eines der Dämpferelemente in das andere Dämpferelement hineinbewegt wird oder umgekehrt. Die Dämpferelemente sind vorzugsweise bei einer durch Bewegen des Teils des Aktors in die erste Richtung bewirkten, zum Verstellen der Ventileinrichtung aus dem Offenzustand in den Schließzustand und zum Beginnen des Pumpbetriebs vorgesehenen Bewegung des ersten Ventilelements in die erste Betätigungsrichtung auf das zweite Ventilelement zu relativ zueinander bewegbar, insbesondere ineinander bewegbar.

Eine weitere Ausführungsform zeichnet sich dadurch aus, dass die Dämpferelemente in die erste Richtung und in die zweite Richtung relativ zu dem Anschlag, insbesondere translatorisch, bewegbar sind, wobei mittels des Anschlags eine Bewegung des zweiten Dämpferelements in die zweite Richtung begrenzbar ist, sodass bei der durch das Bewegen des Teils des Aktors in die erste Richtung bewirkten und zum Verstellen der Ventileinrichtung aus dem Offenzustand in den Schließzustand und zum Beginnen des Pumpbetriebs vorgesehenen Bewegung des ersten Ventilelements in die erste Betätigungsrichtung auf das zweite Ventilelement zu das erste Dämpferelement in die erste Richtung relativ zu dem zweiten Dämpferelement, insbesondere translatorisch, bewegbar ist, während eine Bewegung des zweiten Dämpferelements in die erste Richtung unterbleibt. Hierdurch können die Dämpferelemente im Hinblick auf ihre Bewegung vorteilhaft beeinflusst werden, um besonders einfach und vorteilhaft sowie schnell zwischen dem Pumpbetrieb und dem Öffnungsbetrieb umschalten zu können.

Bei einer weiteren, besonders vorteilhaften Ausführungsform der Erfindung weist die Aktorvorrichtung ein, insbesondere zumindest mittelbar, mit den Dämpferelementen gekoppeltes Rückstellelement auf, welches beispielsweise als eine insbesondere mechanische Feder ausgebildet sein kann. Mittels des Rückstellelements sind die Dämpferelemente entlang der ersten Richtung und/oder entlang der zweiten Richtung relativ zueinander bewegbar, wodurch mittels des Rückstellelements eine beziehungsweise die zuvor genannte, entlang der ersten Betätigungsrichtung und/oder der zweiten Betätigungsrichtung verlaufende und eine beziehungsweise die Verstellung der Ventileinrichtung aus dem Schließzustand in den Offenzustand bewirkende Relativbewegung zwischen den Ventilelementen bewirkbar ist.

Dabei hat es sich als besonders vorteilhaft gezeigt, wenn das Rückstellelement einerseits mit dem ersten Dämpferelement und andererseits mit dem zweiten Dämpferelement, insbesondere starr und/oder direkt, gekoppelt ist.

In weiterer Ausgestaltung der Erfindung ist es vorgesehen, dass die Dämpferelemente zwei, insbesondere einander gegenüberliegende, Dämpferkammern begrenzen, in welchen jeweils ein Dämpfungsmedium, insbesondere ein Dämpfungsfluid, aufgenommen ist, welches in die Dämpferkammern einleitbar und aus den Dämpferkammern ausleitbar ist. Insbesondere kann das Dämpfungsfluid zwischen den Dämpferkammern überströmen und somit von einer Dämpferkammer in die andere Dämpferkammer und umgekehrt strömen.

Um dabei besonders vorteilhaft zwischen dem Öffnungsbetrieb und dem Pumpbetrieb umschalten zu können, ist es in weiterer Ausgestaltung der Erfindung vorgesehen, dass das Dämpfermedium das Fluid ist.

Eine weitere Ausführungsform zeichnet sich durch ein Antriebselement aus, welches ein erstes Antriebsteil, ein zweites Antriebsteil und eine durch die Antriebsteile begrenzte Antriebskammer aufweist. Die vorherigen und folgenden Ausführungen zu dem Abtriebselement können ohne weiteres auch auf das Antriebselement übertragen werden. Somit kann beispielsweise das Antriebsteil ein Antriebskolben beziehungsweise eine Wand, insbesondere ein Boden, eines Falten- oder Federbalgs sein, wobei beispielsweise das zweite Antriebsteil ein Antriebsgehäuse, insbesondere Antriebszylinder, oder eine weitere Wand, insbesondere eine Seitenwand, der Falten beziehungsweise Federbalgs sein kann. In dem Pumpbetrieb ist beziehungsweise wird das erste Antriebsteil abwechselnd in die erste Richtung und in die zweite Richtung relativ zu dem zweiten Antriebsteil mit dem zweiten Ventilelement mit bewegbar beziehungsweise mit bewegt, wodurch das Fluid aus der Antriebskammer heraus zu dem Abtriebselement förderbar und in die Antriebskammer hineinförderbar ist.

Eine weitere Ausführungsform zeichnet sich durch eine Rückstelleinrichtung aus, welche beispielsweise als eine insbesondere mechanische Feder ausgebildet sein kann. Mittels der Rückstelleinrichtung sind das erste Antriebsteil und das zweite Ventilelement in die zweite Richtung relativ zu dem zweiten Antriebsteil bewegbar.

Als weiterhin besonders vorteilhaft hat es sich gezeigt, wenn die Rückstelleinrichtung mit einem Anschlagelement gekoppelt ist, welches mit dem ersten Antriebsteil und mit dem zweiten Ventilelement mit bewegbar ist, wobei das Anschlagelement in die zweite Richtung zumindest mittelbar an dem zweiten Dämpferelement und an dem Rückstellelement abstützbar ist, insbesondere sodass eine in die zweite Richtung relativ zu dem zweiten Dämpferelement und relativ zu dem Rückstellelement erfolgende Bewegung des zweiten Ventilelements und des ersten Antriebsteils mittels des Anschlagelements begrenzbar oder unterbindbar ist.

Als weiterhin besonders vorteilhaft hat es sich gezeigt, wenn die Aktorvorrichtung einen von dem Dämpfungsmedium durchströmbaren Kanal und ein in dem Kanal angeordnetes Rückschlagventil aufweist, welches eine in eine erste Strömungsrichtung und in eine der Dämpferkammern hinein verlaufende Strömung des Dämpfungsmediums durch den Kanal zulässt und den Kanal für eine in eine der ersten Strömungsrichtung entgegengesetzte zweite Strömungsrichtung und aus der einen Dämpferkammer heraus erfolgende Strömung des Dämpfungsmediums versperrt.

Ein zweiter Aspekt der Erfindung betrifft ein Verfahren zum Betreiben einer Aktorvorrichtung, insbesondere der Aktorvorrichtung gemäß dem ersten Aspekt der Erfindung. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt. Die Aktorvorrichtung weist bei dem zweiten Aspekt der Erfindung wenigstens ein Abtriebselement auf, welches mit einem Fluid beaufschlagbar und dadurch in wenigstens eine Haltestellung bewegbar ist.

Die Aktorvorrichtung weist außerdem einen Aktor auf, welcher angesteuert und dadurch in einem Pumpbetrieb betrieben wird, in welchem zumindest ein Teil des Aktors durch das Ansteuern des Aktors abwechselnd in eine erste Richtung und in eine der ersten Richtung entgegengesetzte zweite Richtung bewegt wird, wodurch zum Beaufschlagen des Abtriebselements mit dem Fluid das Fluid zu dem Abtriebselement gefördert wird.

Die Aktorvorrichtung weist außerdem wenigstens einen Abführkanal auf, über welchen das Fluid von dem Abtriebselement abführbar ist.

Die Aktorvorrichtung weist außerdem eine Ventileinrichtung auf, welche zwei Ventilelemente aufweist, die relativ zueinander bewegbar sind, wodurch die Ventileinrichtung zwischen wenigstens einem den Abführkanal versperrenden Schließzustand, in welchem unter Versperren des Abführkanals das Abtriebselement durch das Fluid in der Haltestellung zu halten ist, und wenigstens einem den Abführkanal freigebenden Offenzustand verstellbar ist, in welchem die Ventilelemente ein Abführen des Fluids von dem Abtriebselement über den Abführkanal und dadurch eine Bewegung des Abtriebselements aus der Haltestellung in wenigstens eine von der Haltestellung unterschiedliche Ausweichstellung zulassen.

Durch Bewegen des Teils des Aktors in die erste Richtung ist ein erstes der Ventilelemente in eine erste Betätigungsrichtung bewegbar und dadurch auf das zweite Ventilelement zu bewegbar, wodurch die Ventileinrichtung in den Schließzustand verstellbar ist. Durch Bewegen des Teils des Aktors in die zweite Richtung ist eine Bewegung des ersten Ventilelements in eine der ersten Betätigungsrichtung entgegengesetzte zweite Betätigungsrichtung von dem zweiten Ventilelement weg bewirkbar, wodurch die Ventileinrichtung in den Offenzustand verstellbar ist. In dem Pumpbetrieb bewegt die Aktorvorrichtung den Teil des Aktors abwechselnd in die erste Richtung und in die zweite Richtung derart, dass in dem Pumpbetrieb nach einem insbesondere anfänglichen Verstellen der Ventileinrichtung in den Schließzustand die Ventileinrichtung trotz des in dem Pumpbetrieb stattfindenden, abwechselnden Bewegens des Teils des Aktors in die erste Richtung und in die zweite Richtung in dem Schließzustand verbleibt, wodurch in dem Pumpbetrieb das Fluid zu dem Abtriebselement gefördert wird. Außerdem wird die Aktorvorrichtung in einem von dem Pumpbetrieb unterschiedlichen und sich an den Pumpbetrieb anschließenden Öffnungsbetrieb betrieben, in welchem eine in die zweite Richtung erfolgende Bewegung des Teils des Aktors zu einer in die zweite Betätigungsrichtung und von dem zweiten Ventilelement weg verlaufenden Bewegung des ersten Ventilelements und dadurch zu einem Verstellen der Ventileinrichtung aus dem Schließzustand in den Offenzustand führt.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:

Fig. 1     eine schematische Darstellung einer ersten Ausführungsform einer erfindungsgemäßen Aktorvorrichtung,

Fig. 2     ausschnittsweise eine schematische Darstellung der Aktorvorrichtung gemäß Fig. 1;

Fig. 3     eine weitere schematische Darstellung der Aktorvorrichtung gemäß Fig. 1;

Fig. 4     eine weitere schematische Darstellung der Aktorvorrichtung gemäß Fig. 1;

Fig. 5     eine weitere schematische Darstellung der Aktorvorrichtung gemäß Fig. 1;

Fig. 6     eine weitere schematische Darstellung der Aktorvorrichtung gemäß Fig. 1;

Fig. 7     eine weitere schematische Darstellung der Aktorvorrichtung gemäß Fig. 1;

Fig. 8     ausschnittsweise eine schematische Schnittansicht einer zweiten Ausführungsform der Aktorvorrichtung;

Fig. 9     eine schematische Schnittansicht einer dritten Ausführungsform der Aktorvorrichtung;

Fig. 10    eine weitere schematische Darstellung der dritten Ausführungsform der Aktorvorrichtung;

Fig. 11    eine weitere schematische Darstellung der dritten Ausführungsform der Aktorvorrichtung;

Fig. 12    eine weitere schematische Darstellung der dritten Ausführungsform der Aktorvorrichtung;

Fig. 13    eine weitere schematische Darstellung der dritten Ausführungsform der Aktorvorrichtung;

Fig. 14    ausschnittsweise eine schematische Schnittansicht einer vierten Ausführungsform der Aktorvorrichtung;

Fig. 15    ein Diagramm zum Veranschaulichen einer Ansteuerung eines Aktors der Aktorvorrichtung;

Fig. 16    eine schematische Darstellung einer fünften Ausführungsform der Aktorvorrichtung;

Fig. 17    ein Diagramm zum Veranschaulichen einer weiteren Ansteuerung des Aktors;

Fig. 18    ein Diagramm zum Veranschaulichen einer weiteren Ansteuerung des Aktors;

Fig. 19    ein Diagramm zum Veranschaulichen einer weiteren Ansteuerung des Aktors; und

Fig. 20    eine schematische Darstellung einer sechsten Ausführungsform der Aktorvorrichtung.

In den Fig. sind gleiche oder funktionsgleiche Elemente mit gleichen Bezugzeichen versehen.

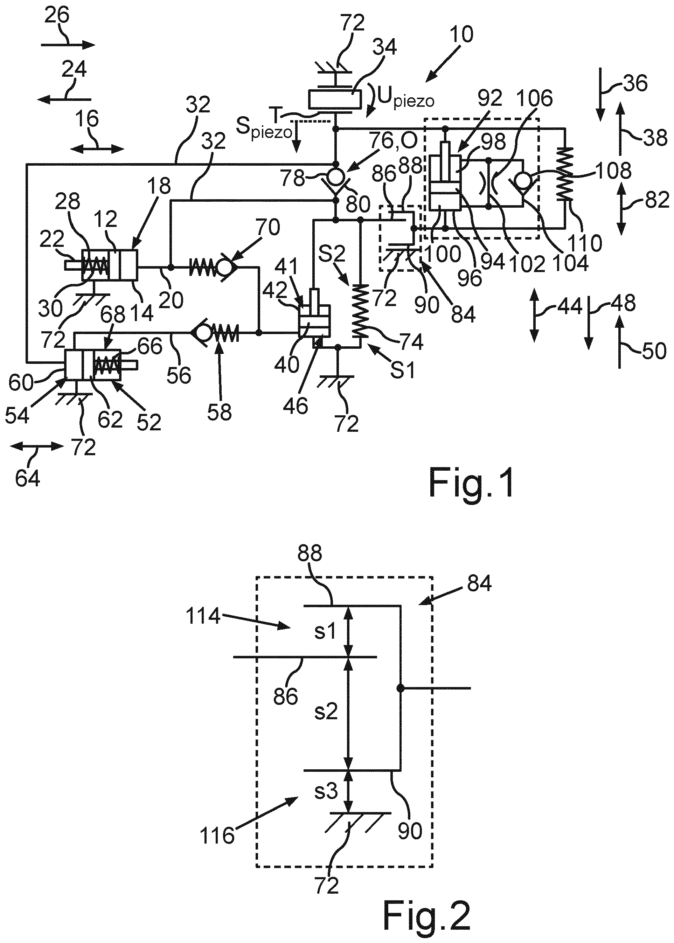

Fig. 1 zeigt in einer schematischen Darstellung eine erste Ausführungsform einer Aktorvorrichtung 10, welche als hydraulischer Aktor, insbesondere als piezohydraulischer Aktor, ausgebildet ist. Die Aktorvorrichtung 10 weist ein Abtriebselement 12 auf, welches bei der ersten Ausführungsform als ein erster Kolben ausgebildet ist. Der erste Kolben wird auch als Abtriebskolben bezeichnet. Das Abtriebselement 12 ist in einem beispielsweise als Zylinder ausgebildeten Gehäuse 14 translatorisch bewegbar aufgenommen, wobei das Gehäuse 14 auch als Abtriebsgehäuse bezeichnet wird und somit als Abtriebszylinder ausgebildet sein kann. Das beispielsweise als ein Kolben oder als ein Boden eines Feder- oder Faltenbalgs ausgebildete Abtriebselement 12 ist entlang einer in Fig. 1 durch einen Doppelpfeil 16 veranschaulichten Bewegungsrichtung relativ zu dem Gehäuse 14 translatorisch bewegbar. Dabei begrenzen das Abtriebselement 12 und das Gehäuse 14 jeweils teilweise eine Abtriebskammer 18, wobei die Abtriebskammer 18 durch das Abtriebselement 12 direkt begrenzt ist. Wird nun ein beispielsweise als Gas oder aber als Flüssigkeit ausgebildetes Fluid, insbesondere über einen Kanal 20, in die Abtriebskammer 18 eingeleitet, so wird dadurch das Abtriebselement 12, insbesondere direkt, mit dem in die Abtriebskammer 18 eingeleiteten Fluid beaufschlagt.

Das Abtriebselement 12 ist mit einer Kolbenstange 22 verbunden, sodass die Kolbenstange 22 und das Abtriebselement 12 gemeinsam entlang der Bewegungsrichtung relativ zu dem Gehäuse 14 translatorisch bewegbar sind. Wird beispielsweise das Abtriebselement 12 in eine mit der Bewegungsrichtung zusammenfallende beziehungsweise parallel zu der Bewegungsrichtung verlaufende und in Fig. 1 durch einen Pfeil 24 veranschaulichte erste Abtriebsrichtung bewegt, so wird dadurch die Kolbenstange 22 relativ zu dem Gehäuse 14 in die erste Abtriebsrichtung bewegt und aus dem Gehäuse 14 zumindest teilweise herausbewegt. Wird das Abtriebselement 12 in eine in Fig. 1 durch einen Pfeil 26 veranschaulichte, der ersten Abtriebsrichtung entgegengesetzte und mit der Bewegungsrichtung zusammenfallende beziehungsweise parallel zur Bewegungsrichtung verlaufende zweite Abtriebsrichtung relativ zu dem Gehäuse 14, insbesondere translatorisch, bewegt, so wird dadurch die Kolbenstange 22 relativ zu dem Gehäuse 14 in die zweite Abtriebsrichtung relativ zu dem Gehäuse 14, insbesondere translatorisch, bewegt, wobei hierbei die Kolbenstange 22 zumindest teilweise in das Gehäuse 14 hinein bewegt wird.

Die Aktorvorrichtung 10 weist dabei ein Federelement 28 auf, welches vorliegend als mechanische Feder ausgebildet ist. Das Federelement 28 ist, insbesondere entlang der Bewegungsrichtung, einerseits zumindest mittelbar, insbesondere direkt, an dem Gehäuse 14 und andererseits zumindest mittelbar, insbesondere direkt, an dem Abtriebselement 12 abgestützt. Dabei ist das Federelement 28 bei der ersten Ausführungsform in einer der Abtriebskammer 18 gegenüberliegenden Federkammer 30 angeordnet, welche durch das Gehäuse 14 und durch das Abtriebselement 12 jeweils teilweise begrenzt ist. Wird das Abtriebselement 12 in die erste Abtriebsrichtung bewegt, so wird dadurch das Federelement 28 gespannt. In der Folge stellt das Federelement 28 eine auch als Gegenkraft bezeichnete Federkraft bereit, mittels welcher das Abtriebselement 12 in die zweite Abtriebsrichtung bewegbar ist beziehungsweise bewegt wird, insbesondere dann, wenn ein Ausströmen des Fluids aus der Abtriebskammer 18, insbesondere über einen Abführkanal 32, zugelassen wird.

Das Abtriebselement 12 ist zumindest mittelbar, insbesondere über die Kolbenstange 22, mit einem in den Fig. nicht dargestellten Bauelement gekoppelt, insbesondere bewegungsgekoppelt. Beispielsweise kann das Bauelement durch Bewegen des Abtriebselements 12 bewegt werden. Durch Pumpen oder Fördern des Fluids in die Abtriebskammer 18 wird das Abtriebselement 12, insbesondere direkt, mit dem Fluid, welches in die Abtriebskammer 18 hineingepumpt beziehungsweise hineingefördert wird, beaufschlagt. Hierdurch ist beziehungsweise wird das Abtriebselement 12 aus einer beispielsweise in Fig. 1 gezeigten Ausgangsstellung in eine von der Ausgangsstellung unterschiedliche Haltestellung bewegbar beziehungsweise bewegt. Wird beispielsweise nach dem Bewegen des Abtriebselements 12 in die Haltestellung kein weiteres Fluid mehr in die Abtriebskammer 18 hineingefördert beziehungsweise unterbleibt nach dem Bewegen des Abtriebselements 12 in die Haltestellung ein weiteres Fördern von Fluid in die Abtriebskammer 18 und wird nach dem Bewegen des Abtriebselements 12 in die Haltestellung ein Abführen des in der Abtriebskammer 18 aufgenommenen Fluids unterbunden, insbesondere dadurch, dass der Abführkanal 32 versperrt ist beziehungsweise wird, so wird das Abtriebselement 12 mittels des in der Abtriebskammer 18 aufgenommenen Fluids, insbesondere entgegen der von dem Federelement 28 bereitgestellten Feder- beziehungsweise Gegenkraft, in der Haltestellung gehalten. In der Haltestellung ist beispielsweise das Federelement 28 gespannt, sodass das Federelement 28 in der Haltestellung die zuvor genannte Federbeziehungsweise Gegenkraft bereitstellt.

Wird jedoch dann beispielsweise der Abführkanal 32 freigegeben, sodass über den Abführkanal 32 zumindest ein Teil des zunächst in der Abtriebskammer 18 aufgenommenen Fluids aus der Abtriebskammer 18 herausströmen und in den Abführkanal 32 einströmen kann, so kann das Abtriebselement 12 der Federkraft ausweichen, wodurch das Abtriebselement 12 mittels der Federkraft aus der Haltestellung in eine von der Haltestellung unterschiedliche Ausweichstellung bewegbar ist beziehungsweise bewegt wird. Die Ausweichstellung ist beispielsweise die Ausgangsstellung oder die Ausweichstellung ist, insbesondere entlang der Bewegungsrichtung, zwischen der Ausgangsstellung und der Haltestellung angeordnet, sodass beispielsweise dann, wenn der Abführkanal 32 geöffnet wird, das Abtriebselement 12 mittels der Gegenkraft aus der Haltestellung in die Ausgangsstellung beziehungsweise in Richtung der Ausgangsstellung und dabei beispielsweise in die Ausweichstellung bewegbar ist beziehungsweise bewegt wird.

Die Aktorvorrichtung 10 weist einen Aktor 34 auf, welcher beispielsweise als ein Festkörperaktor, insbesondere als ein Piezoaktor, ausgebildet sein kann. Der Aktor 34 ist, insbesondere elektrisch, ansteuerbar. Mit anderen Worten ist der Aktor 34 elektrisch betreibbar. Unter dem elektrischen Betreiben beziehungsweise unter dem elektrischen Ansteuern des Aktors 34 ist zu verstehen, dass der Aktor 34 mit einer elektrischen Spannung $U_{piezo}$ versorgbar ist beziehungsweise versorgt wird. Mit anderen Worten wird an den Aktor 34 die elektrische Spannung angelegt, um dadurch den Aktor 34 anzusteuern. Insbesondere kann unter dem Ansteuern des Aktors 34 verstanden werden, dass das Anlegen der elektrischen Spannung an den Aktor 34 variiert wird. Hierunter kann insbesondere verstanden werden, dass die elektrische Spannung $U_{piezo}$ zwischen einem ersten Wert und einem zweiten Wert variiert wird. Der erste Wert ist vorzugsweise ein von Null unterschiedlicher Wert, wobei der zweite Wert vorzugsweise ein von dem ersten Wert unterschiedlicher Wert ist. Der zweite Wert kann ein von Null unterschiedlicher Wert sein, oder der zweite Wert beträgt Null. Unter einem Beenden der Ansteuerung des Aktors 34 kann insbesondere verstanden werden, dass ein Anlegen einer elektrischen Spannung an den Aktor 34 unterbleibt, das heißt dass ein Versorgen des Aktors 34 mit elektrischer Energie beziehungsweise mit elektrischer Spannung unterbleibt.

Der Aktor 34 ist durch Ansteuern des Aktors 34 in einem Pumpbetrieb betreibbar, in welchem zumindest ein Teil T des Aktors 34 durch das Ansteuern des Aktors 34 abwechselnd in eine durch einen Pfeil 36 veranschaulichte erste Richtung und in eine der ersten Richtung entgegengesetzte und durch einen Pfeil 38 veranschaulichte zweite Richtung, insbesondere translatorisch, bewegbar ist, wodurch zum Beaufschlagen des Abtriebselements 12 mit dem Fluid das Fluid zu dem Abtriebselement 12 förderbar und insbesondere in die Abtriebskammer 18 hineinförderbar ist. Durch Anlegen der elektrischen Spannung oder einer elektrischen Spannung an den Aktor 34 kommt es beispielsweise zu einer Längenzunahme des Aktors 34, wodurch sich beispielsweise der Teil T in die erste Richtung bewegt, insbesondere um einen Weg $S_{piezo}$. Wird beispielsweise das Anlegen der elektrischen Spannung an den Aktor 34 beendet oder wird die elektrische Spannung reduziert, so kommt es dadurch zu einer Längenverkürzung des Aktors 34, sodass sich beispielsweise zumindest das Teil T in die zweite Richtung zurück bewegt, insbesondere um den zuvor genannten Weg. Durch Bewegen des Teils T in die erste Richtung kann das Fluid in die Abtriebskammer 18 hineingefördert werden. Die Aktorvorrichtung 10 weist außerdem den Abführkanal 32 auf, über welchen das zunächst in der Abtriebskammer 18 aufgenommene Fluid zumindest teilweise aus der Abtriebskammer 18 und somit von dem Abtriebselement 12 abführbar ist.

Aus Fig. 1 ist erkennbar, dass bei der ersten Ausführungsform der Aktorvorrichtung 10 ein auch als Fördereinrichtung bezeichnetes Antriebselement 41 aufweist, welches ein auch als Förderelement 40 bezeichnetes erstes Antriebsteil und ein auch als zweites Antriebsteil bezeichnetes Fördergehäuse 42 aufweist. Das Förderelement 40 ist entlang einer in Fig. 1 durch einen Pfeil 44 veranschaulichten zweiten Bewegungsrichtung relativ zu dem Fördergehäuse 42 translatorisch bewegbar. Bei der ersten Ausführungsform ist das Förderelement 40 ein Kolben, wobei das Fördergehäuse 42 ein Gehäuse, insbesondere ein Zylinder, ist. Ferner ist es denkbar, dass das Abtriebselement 12 beziehungsweise das Förderelement 40 eine erste Wandung, insbesondere ein Boden, eines Faltenbalgs ist, wobei dann beispielsweise das Gehäuse 14 beziehungsweise das Fördergehäuse 42 eine zweite Wandung, insbesondere eine Seitenwand, des Faltenbalgs ist. Wird beispielsweise das Fluid in den Faltenbalg hineingefördert, so wird dadurch beispielsweise der Boden relativ zu der Seitenwand translatorisch bewegt, insbesondere in die erste Abtriebsrichtung. Wird dann beispielsweise das Fluid aus dem Faltenbalg, insbesondere aus der Abtriebskammer 18, abgeführt, so wird dadurch beispielsweise eine Bewegung des Bodens relativ zur Seitenwand in die zweite Abtriebsrichtung bewirkt. Entsprechendes kann auf das Förderelement 40 und das Fördergehäuse 42 übertragen werden, insbesondere dann, wenn das Förderelement 40 als die erste Wandung und das Fördergehäuse 42 als die zweite Wandung des Faltenbalgs ausgebildet sind.

Das Förderelement 40 und das Fördergehäuse 42 begrenzen jeweils teilweise eine auch als Antriebskammer bezeichnete Förderkammer 46, welche durch das Förderelement 40 direkt begrenzt ist. Durch Bewegen des Förderelements 40 relativ zum Fördergehäuse 42 wird die Förderkammer 46 in ihrem Volumen variiert. Wird beispielsweise das Förderelement 40 relativ zu dem Fördergehäuse 42 in eine in Fig. 1 durch einen Pfeil 48 veranschaulichte und mit der zweiten Bewegungsrichtung zusammenfallende oder parallel zur zweiten Bewegungsrichtung verlaufende, erste Förderrichtung, insbesondere translatorisch, bewegt, so wird dadurch die Förderkammer 46 in ihrem Volumen verkleinert. Wird beispielsweise das Förderelement 40 in eine der ersten Förderrichtung entgegengesetzte, in Fig. 2 durch einen Pfeil 50 dargestellte und mit der zweiten Bewegungsrichtung zusammenfallende oder parallel zu der zweiten Bewegungsrichtung verlaufende, zweite Förderrichtung relativ zu dem Fördergehäuse 42, insbesondere translatorisch, bewegt, so wird dadurch die Förderkammer 46 in ihrem Volumen vergrößert.

Die Aktorvorrichtung 10 weist außerdem ein Reservoir 52 auf, welches eine Reservoirkammer 54 umfasst. Dabei ist das Fluid oder zumindest ein Teil des Fluids in der Reservoirkammer 54 angeordnet. Wird das Förderelement 40 in die zweite Förderrichtung relativ zu dem Fördergehäuse 42, insbesondere translatorisch, bewegt, so wird dadurch über einen auch als Versorgungskanal bezeichneten Kanal 56 zumindest ein Teil des zunächst in der Reservoirkammer 54 und somit in dem Reservoir 52 aufgenommenen Fluids aus der Reservoirkammer 54 herausgesaugt beziehungsweise herausgefördert, durch den Kanal 56 hindurchgesaugt beziehungsweise hindurchgefördert und in die Förderkammer 46 eingesaugt beziehungsweise hineingefördert. Dabei ist in dem Kanal 56 ein Rückschlagventil 58 angeordnet, welches in Richtung der Reservoirkammer 54 sperrt und in entgegengesetzte Richtung und somit in Richtung der auch als Versorgungskammer bezeichneten Förderkammer 46 öffnet. Dadurch kann mittels des Rückschlagventils 58 vermieden werden, dass das Fluid unerwünschter Weise in den Kanal 56 in Richtung der Reservoirkammer 54 und somit beispielsweise aus der Förderkammer 46 in die Reservoirkammer 54 strömt.

Bei der ersten Ausführungsform ist das Reservoir 52 als ein Fluid- beziehungsweise Hydraulikzylinder ausgebildet. Alternativ ist es denkbar, dass das Reservoir 52 als ein Feder- beziehungsweise Faltenbalg ausgebildet ist. Bei der ersten Ausführungsform weist das Reservoir 52 ein Reservoirgehäuse 60 und einen Reservoirkolben 62 auf, welche jeweils teilweise die Reservoirkammer 54 begrenzen. Der Reservoirkolben 62 ist entlang einer in Fig. 1 durch einen Doppelpfeil 64 veranschaulichten Reservoirrichtung relativ zu dem Reservoirgehäuse 60 translatorisch bewegbar. Das Reservoir 52 weist dabei ein Federelement 66 auf, welches beispielsweise als eine mechanische Feder ausgebildet ist. Das Federelement 66 ist beispielsweise in einer Aufnahmekammer 68 angeordnet, welche beispielsweise der Reservoirkammer 54, insbesondere entlang der Reservoirrichtung, gegenüber liegt. Dabei ist beispielsweise auch die Aufnahmekammer 68 jeweils teilweise durch den Reservoirkolben 62 und das Reservoirgehäuse 60 begrenzt. Das Federelement 66 ist entlang der Reservoirrichtung einerseits zumindest mittelbar, insbesondere direkt, an dem Reservoirgehäuse 60 und andererseits zumindest mittelbar, insbesondere direkt, an dem Reservoirkolben 62 abgestützt. Ist das Federelement 66 gespannt, übt das Federelement 66 eine Federkraft auf den Reservoirkolben 62 aus, wodurch beispielsweise das Fluid in der Reservoirkammer 54 unter Druck gespeichert werden kann. Somit ist das Reservoir 52 beispielsweise ein Druckspeicher, mittels welchem oder in welchem das Fluid unter Druck gespeichert werden kann.

Wird das Fluid aus der Reservoirkammer 54 abgeführt, so kann sich das Federelement 66 beispielsweise zumindest teilweise entspannen und es kommt zu einer Volumenverkleinerung der Reservoirkammer 54. Wird das Fluid in die Reservoirkammer 54 eingeleitet, so führt dies zu einer Volumenvergrößerung der Reservoirkammer 54 und somit zu einem Spannen des Federelements 66.

Wird das Förderelement 40 relativ zu dem Fördergehäuse 42, insbesondere translatorisch, in die erste Förderrichtung bewegt, so führt dies zu einer Volumenverkleinerung der Förderkammer 46 und mittels des Förderelements 40 wird zumindest ein Teil des in der Förderkammer 46 angeordneten Fluids aus der Förderkammer 46 herausgefördert. Da das Rückschlagventil 58 eine Strömung des Fluids aus der Förderkammer 46 in die Reservoirkammer 54 vermeidet, strömt das Fluid, welches mittels des Förderelements 40 aus der Förderkammer 46 herausgefördert wird, durch den Kanal 20 und wird mittels des Kanals 20 in die Abtriebskammer 18 geführt und eingeleitet. Dabei ist in dem Kanal 20 ein Rückschlagventil 70 angeordnet, welches in Richtung der Förderkammer 46 sperrt und in entgegengesetzte Richtung und somit in Richtung der Abtriebskammer 18 öffnet. Insgesamt ist erkennbar, dass beispielsweise der Kanal 56 einerseits fluidisch mit der Förderkammer 46 und andererseits fluidisch mit der Reservoirkammer 54 verbunden ist. Der Kanal 20 ist beispielsweise einerseits mit der Abtriebskammer 18 und andererseits mit der Förderkammer 46 fluidisch verbunden. Das Rückschlagventil 70 verhindert es, dass dann, wenn das Förderelement 40 in die zweite Förderrichtung bewegt wird, das Fluid über den Kanal 20 aus der Abtriebskammer 18 herausgefördert, insbesondere herausgesaugt, wird, sodass bei Bewegen des Förderelements 40 in die zweite Förderrichtung zumindest ein Teil des Fluids aus der Reservoirkammer 54 herausgefördert und in die Förderkammer 46 hineingefördert wird.

Wie im Folgenden noch genauer erläutert wird, wird eine beziehungsweise die Bewegung des Förderelements 40 in die erste Förderrichtung durch eine in die erste Richtung erfolgende Bewegung des Teils T des Aktors 34 bewirkt, und eine Bewegung des Förderelements 40 in die zweite Förderrichtung wird durch eine in die zweite Richtung erfolgende Bewegung des Teils T des Aktors 34 bewirkt. Das Fördergehäuse 42 ist beispielsweise an einem Basiselement 72 festgelegt, insbesondere zumindest entlang der Förderrichtung, sodass Relativbewegungen zwischen dem Fördergehäuse 42 und dem Basiselement 72 zumindest entlang der Förderrichtung unterbunden sind beziehungsweise unterbleiben. Das Basiselement ist oder fungiert beispielsweise als ein Anschlag, mittels welchem Bewegungen von anderen Bauteilen der Aktorvorrichtung, insbesondere in die erste und/oder zweite Richtung, zumindest begrenzbar oder verhinderbar sind. Insbesondere kann das Basiselement ein Gehäuse sein, in welchem beispielsweise, insbesondere relativ zu dem Gehäuse bewegbare, Elemente der Aktorvorrichtung 10 wie beispielsweise das Förderelement 40 angeordnet sein können.

Dabei ist ein Federelement 74 vorgesehen, welches entlang der Förderrichtung einerseits an dem Basiselement 72 und andererseits an dem Förderelement 40 abgestützt ist. Mit anderen Worten ist beispielsweise das Federelement 74, welches vorzugsweise eine mechanische Feder ist, einerseits mit dem Basiselement 72 und beispielsweise mit dem Fördergehäuse 42 und andererseits mit dem Förderelement 40 in Kopplung. Insbesondere ist eine erste Stelle S1 des Federelements 74 an dem Basiselement 72 festgelegt, und eine zweite Stelle S2 des Federelements 74 ist mit dem Förderelement 40 gekoppelt und somit mit dem Förderelement 40 entlang der Förderrichtung relativ zu dem Basiselement 72 und relativ zu dem Fördergehäuse 42, insbesondere translatorisch, mit bewegbar. Die Stellen S1 und S2 sind beispielsweise jeweilige Enden des Federelements 74. Wird somit beispielsweise das Förderelement 40 relativ zu dem Fördergehäuse 42 in die erste Förderrichtung bewegt, so wird das Federelement 74 gespannt, insbesondere komprimiert. Wird beispielsweise das Förderelement 40 in die zweite Förderrichtung relativ zu dem Fördergehäuse 42 und relativ zu dem Basiselement 72 bewegt, so wird dadurch das Federelement 74 zumindest teilweise entspannt, insbesondere gelängt. Durch Spannen des Federelements 74 stellt dieses beispielsweise eine Federkraft bereit, mittels welcher beispielsweise das Förderelement 40 in die zweite Förderrichtung relativ zu dem Fördergehäuse 42 und somit relativ zu dem Basiselement 72 bewegbar ist.

Die Aktorvorrichtung 10 weist eine Ventileinrichtung 76 auf, welche zwei Ventilelemente 78 und 80 umfasst. Die Ventilelemente 78 und 80 sind entlang einer in Fig. 1 durch einen Doppelpfeil 82 veranschaulichten Ventilrichtung, insbesondere translatorisch, relativ zueinander bewegbar. Die Ventilrichtung fällt bei der ersten Ausführungsform mit der ersten Richtung und mit der zweiten Richtung zusammen beziehungsweise verläuft parallel zu der ersten Richtung und parallel zu der zweiten Richtung, welche parallel zur ersten Richtung verläuft und der ersten Richtung entgegengesetzt ist.

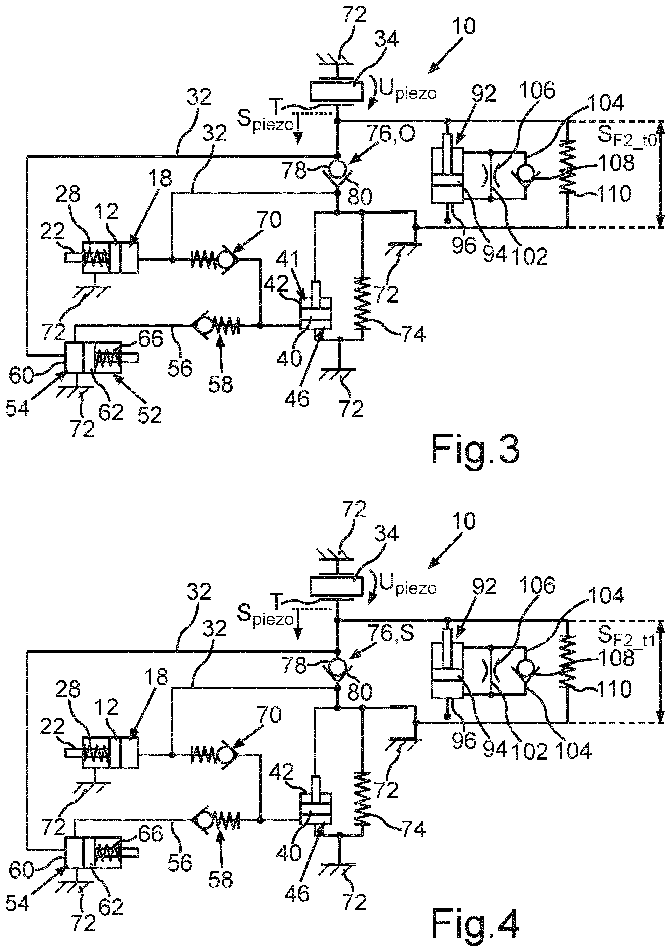

Durch Bewegen der Ventilelemente 78 und 80 relativ zueinander ist die Ventileinrichtung 76 zwischen einem in Fig. 1 gezeigten Offenzustand O und einem beispielsweise in Fig. 4 gezeigten Schließzustand S verstellbar beziehungsweise umschaltbar. Außerdem ist aus Fig. 1 erkennbar, dass der Abführkanal 32 einerseits fluidisch mit der Abtriebskammer 18, insbesondere über zumindest einen Teil des Kanals 20, und andererseits fluidisch mit der Reservoirkammer 54 verbunden ist. Wird somit über den Abführkanal 32 zumindest ein Teil des zunächst in der Abtriebskammer 18 angeordneten Fluids aus der Abtriebskammer 18 abgeführt, sodass das aus der Abtriebskammer 18 abgeführt Fluid durch den Abführkanal 32 strömt, so wird das aus der Abtriebskammer 18 und somit von dem Abtriebselement 12 abgeführte Fluid mittels des Abführkanals 32 von der Abtriebskammer 18 zu der und insbesondere in die Reservoirkammer 54 geleitet. Dabei ist die Ventileinrichtung 76 in dem Abführkanal 32 angeordnet, sodass die Ventileinrichtung 76 in dem Schließzustand S den Abführkanal 32 fluidisch versperrt. Hierdurch kann das Abtriebselement 12 - nachdem es auf die beschriebene Weise in die Haltestellung bewegt wurde - insbesondere entgegen der Gegenkraft in der Haltestellung gehalten werden. Mit anderen Worten ist in dem Zustand S ein Abführen von Fluid aus der Abtriebskammer 18 unterbunden. In dem Offenzustand O jedoch gibt die Ventileinrichtung 76 den Abführkanal 32 frei, sodass der Abführkanal 32 in der Offenstellung O geöffnet und von zumindest einem Teil des Fluids aus der Abtriebskammer 18 durchströmbar ist. Mit anderen Worten, in dem Offenzustand O lassen die Ventilelemente 78 und 80 und somit die Ventileinrichtung 76 ein Abführen des Fluids aus der Abtriebskammer 18 und somit von dem Abtriebselement 12 über den Abführkanal 32 zu, wodurch die Ventilelemente 78 und 80 und somit die Ventileinrichtung 76 die zuvor beschriebene Bewegung des Abtriebselements 12 aus der Haltestellung in die Ausweichstellung zulassen.

Außerdem ist die Abtriebsvorrichtung 10 derart ausgebildet, dass durch Bewegen des Teils T des Aktors 34 in die erste Richtung (Pfeil 36) beispielsweise ausgehend von dem Offenzustand O das erste Ventilelement 78 in eine durch den Pfeil 36 veranschaulichte erste Betätigungsrichtung bewegbar und dadurch auf das zweite Ventilelement 80 zu bewegbar ist, wodurch die Ventileinrichtung 76 aus dem Offenzustand O in den Schließzustand S verstellbar ist. Mit anderen Worten fällt bei der ersten Ausführungsform die erste Richtung mit der ersten Betätigungsrichtung zusammen beziehungsweise umgekehrt. Befindet sich somit beispielsweise die Ventileinrichtung 76 zunächst in dem Offenzustand O, und wird dann der Teil T durch entsprechendes Ansteuern des Aktors 34 in die erste Richtung bewegt, so wird dadurch das Ventilelement 78 in die erste Richtung relativ zu dem Ventilelement 80 bewegt und dabei auf das Ventilelement 80 zubewegt, insbesondere derart, dass das Ventilelemente 78 in Kontakt mit dem Ventilelement 80 kommt und somit die Ventileinrichtung 76 geschlossen, das heißt in den Schließzustand S überführt wird.

Aus Fig. 1 ist erkennbar, dass beispielsweise das Ventilelement 80 einen Ventilsitz für das beispielsweise als Ventilkugel ausgebildete Ventilelement 78 bildet. In dem Offenzustand O sind die Ventilelemente 78 und 80 voneinander beabstandet, sodass das Ventilelement 78 von dem Ventilsitz beabstandet ist und somit nicht auf dem Ventilsitz sitzt. In dem Schließzustand S jedoch liegen die Ventilelemente 78 und 80 zumindest mittelbar, insbesondere direkt, aneinander an, sodass dann beispielsweise das Ventilelement 78 auf seinem korrespondierenden Ventilsitz sitzt. Bei der ersten Ausführungsform ist das Ventilelement 78 beispielsweise derart mit dem Teil T insbesondere starr, gekoppelt, dass dann, wenn der Teil T durch entsprechendes Ansteuern des Aktors 34 einen ersten Weg und/oder mit einer ersten Geschwindigkeit bewegt wird, daraus resultierend das Ventilelement 78 einen zweiten Weg und/oder mit einer zweiten Geschwindigkeit bewegt wird, wobei der zweite Weg dem ersten Weg und die zweite Geschwindigkeit der ersten Geschwindigkeit entspricht. Des Weiteren ist es vorgesehen, dass das zweite Ventilelement 80, insbesondere starr, mit dem Förderelement 40 gekoppelt beziehungsweise bewegungsgekoppelt ist, sodass beispielsweise das Ventilelement 80 mit dem Förderelement 40 entlang der Förderrichtung mitbewegbar ist. Somit fallen beispielsweise die erste Richtung mit der ersten Förderrichtung und die zweite Richtung mit der zweiten Förderrichtung zusammen. Insbesondere sind das Ventilelement 80 und das Förderelement 40 derart miteinander gekoppelt, insbesondere bewegungsgekoppelt, dass beispielsweise dann, wenn das Förderelement 40 einen dritten Weg und/oder mit einer dritten Geschwindigkeit bewegt wird, daraus resultierend das Ventilelement 80 einen vierten Weg und/oder mit einer vierten Geschwindigkeit bewegt, insbesondere mit dem Förderelement 40 mitbewegt wird, wobei die dritte Geschwindigkeit der vierten Geschwindigkeit und der dritte Weg dem vierten Weg entspricht. Außerdem ist aus Fig. 1 erkennbar, dass auch das Reservoirgehäuse 60 und das Gehäuse 14 an dem Basiselement 72 festgelegt sind. Der Teil T ist dabei entlang der ersten Richtung und entlang der zweiten Richtung relativ zu dem Basiselement 72, insbesondere translatorisch, bewegbar. Ferner ist aus Fig. 1 erkennbar, dass das Federelement 74, insbesondere die Stelle S2, mit dem Ventilelement 80, insbesondere starr, gekoppelt ist, sodass beispielsweise die Stelle S2, das Förderelement 40 und das Ventilelement 80 gemeinsam mit der gleichen Geschwindigkeit und dem gleichen Weg bewegbar sind beziehungsweise bewegt werden, insbesondere dann, wenn beispielsweise das Förderelement 40 bewegt wird. Durch Bewegen des Teils T des Aktors 34 in die zweite Richtung ist eine Bewegung des ersten Ventilelements 78 in eine der ersten Betätigungsrichtung und somit der ersten Richtung entgegengesetzte zweite Betätigungsrichtung von dem zweiten Ventilelement 80 weg bewirkbar, wodurch die Ventileinrichtung 76 aus dem Schließzustand S in den Offenzustand O verstellbar ist.

Die zweite Betätigungsrichtung fällt somit mit der zweiten Richtung zusammen. Mit anderen Worten, wird der Aktor 34 derart angesteuert, dass sich der Aktor 34 längenverkürzt, sodass sich der Teil T relativ zu dem Basiselement 72 in die zweite Richtung bewegt, so kann beispielsweise dadurch eine Bewegung des Ventilelements 78 relativ zu dem Ventilelement 80 in die zweite Richtung und somit von dem Ventilelement 80 weg bewirkt werden, wodurch beispielsweise ausgehend von dem Schließzustand S die Ventileinrichtung 76 geöffnet, das heißt aus ihrem Schließzustand S in den Offenzustand O überführt werden kann.

Die Aktorvorrichtung 10 ist nun dazu ausgebildet, in dem in dem Pumpbetrieb den Teil T des Aktors 34 abwechselnd in die erste Richtung (Pfeil 36) und in die zweite Richtung (Pfeil 38) derart zu bewegen, dass in dem Pumpbetrieb nach einem anfänglichen Verstellen der Ventileinrichtung 76 in den Schließzustand S die Ventileinrichtung 76 trotz des in dem Pumpbetrieb stattfindenden, abwechselnden Bewegens des Teils T in die erste Richtung und in die zweite Richtung in dem Schließzustand S verbleibt, wodurch in dem Pumpbetrieb das Fluid in die Abtriebskammer 18 und somit zu dem Abtriebselement 12 förderbar ist beziehungsweise gefördert wird. Mit anderen Worten bewegen sich in dem Pumpbetrieb der Teil T, die Ventilelemente 78 und 80 und das Förderelement 40 gemeinsam beziehungsweise gleichzeitig abwechselnd in die erste Richtung und in die zweite Richtung relativ zu dem Basiselement 72 und somit relativ zu dem Fördergehäuse 42, während sich die Ventileinrichtung 76 in dem Schließzustand S befindet und in dem Schließzustand S verbleibt und insbesondere während Relativbewegungen zwischen den Ventilelementen 78 und 80 unterbleiben, sodass abwechselnd das Fluid aus der Reservoirkammer 54 über den Kanal 56 in die Förderkammer 46 hineingefördert und daraufhin aus der Förderkammer 46 herausgefördert und dadurch von der Förderkammer 46 über den Kanal 20 in die Abtriebskammer 18 hineingefördert und somit zu dem Abtriebselement 12 gefördert wird. Und ein Abführen des Fluids aus der Abtriebskammer 18 über den Abführkanal 32 unterbleibt (da die Ventileinrichtung 76 in dem Abführkanal 32 geschlossen ist). Insbesondere ist aus Fig. 1 erkennbar, dass in Strömungsrichtung des beispielsweise von der Abtriebskammer 18 durch den Abführkanal 32 in die Reservoirkammer 54 strömenden Fluids die Ventileinrichtung 76 in dem Abführkanal 32 und dabei zwischen der Abtriebskammer 18 und der Reservoirkammer 54 angeordnet ist.

Die Aktorvorrichtung 10 ist außerdem in einem von dem Pumpbetrieb unterschiedlichen und sich beispielsweise an den Pumpbetrieb anschließenden Öffnungsbetrieb betreibbar. In dem Öffnungsbetrieb beziehungsweise zur Realisierung des Öffnungsbetriebs wird beispielsweise der Aktor 34 derart angesteuert, dass eine in die zweite Richtung und relativ zu dem Basiselement 72 erfolgende Bewegung des Teils T des Aktors 34 erfolgt und zu einer in die zweite Richtung und von dem zweiten Ventilelement 80 weg verlaufenden Bewegung des ersten Ventilelements 78 und dadurch zu einem Verstellen der Ventileinrichtung 76 aus dem Schließzustand S in den Offenzustand O führt. Somit wird in dem beziehungsweise durch den Pumpbetrieb die Ventileinrichtung 76 geöffnet, wodurch beispielsweise das Fluid aus der Abtriebskammer 18 abgelassen wird und in der Folge das Abtriebselement 12 der Gegenkraft ausweichen kann.

Die Aktorvorrichtung 10 ist beispielsweise in einem Haltebetrieb betreibbar, in welchem ein Fördern von Fluid in die Abtriebskammer 18 unterbleibt und die Ventileinrichtung 76 geschlossen ist, wodurch in dem Haltebetrieb das Abtriebselement 12 mittels des in der Abtriebskammer 18 aufgenommenen Fluids in der Haltestellung gehalten wird. Insbesondere wird in dem Haltebetrieb der Aktor 34 zumindest im Wesentlichen kontinuierlich mit einer insbesondere zumindest im Wesentlichen konstanten elektrischen Spannung versorgt, wodurch die Ventileinrichtung 76 im Haltebetrieb, insbesondere mittels des Aktors 34 über dessen Teil T beziehungsweise durch Bestromen des Aktors 34, geschlossen gehalten wird. Die Aktorvorrichtung 10 ermöglicht es dabei insbesondere, besonders schnell, das heißt in besonders kurzer Zeit, von dem Haltebetrieb in den auch als Release-Betrieb bezeichneten Öffnungsbetrieb umzuschalten, sodass die Ventileinrichtung 76 besonders schnell geöffnet werden und in der Folge das Abtriebselement 12 besonders schnell der Gegenkraft ausweichen kann. Hierzu wird beispielsweise die elektrische Spannung, welche an dem Aktor 34 anliegt beziehungsweise angelegt wird, auf null reduziert. Dadurch kann beispielsweise ein in dem Haltebetrieb und mittels des Abtriebselements 12 realisiertes Halten des zuvor genannten Bauelements aufgehoben werden, sodass beispielsweise das Bauelement einer entsprechenden Kraft ausweichen kann. Bei der ersten Ausführungsform weist die Aktorvorrichtung 10 eine Anschlagseinheit 84 auf, welche auch als Hard-stop-Einheit bezeichnet wird und in Fig. 2 vergrößert dargestellt ist. Die Anschlagseinheit 84 weist einen ersten Anschlag 86 auf, welcher mit dem Förderelement 40, mit der Stelle S2 und insbesondere mit dem Ventilelement 80, insbesondere in die erste Richtung und in die zweite Richtung, mit bewegbar ist, insbesondere direkt, das heißt vorzugsweise ohne eine Übersetzung. Wird somit beispielsweise das Ventilelement 80 mit einer fünften Geschwindigkeit und/oder einem fünften Weg in die erste beziehungsweise zweite Richtung relativ zu dem Basiselement 72 bewegt, so wird dadurch der Anschlag 86 beispielsweise mit einer sechsten Geschwindigkeit und/oder einem sechsten Weg in die erste beziehungsweise zweite Richtung relativ zu dem Basiselement 72 bewegt beziehungsweise mit dem Ventilelement 80 mit bewegt, wobei die fünfte Geschwindigkeit der sechsten Geschwindigkeit und/oder der fünfte Weg dem sechsten Weg entspricht. Die Anschlagseinheit 84 weist außerdem einen zweiten Anschlag 88 und einen dritten Anschlag 90 auf, welche - wie auch der Anschlag 86 in die erste Richtung und in die zweite Richtung relativ zu dem Basiselement 72, insbesondere translatorisch, bewegbar sind. Die Anschläge 86, 88 und 90 werden auch als Anschlagselemente bezeichnet

Außerdem weist die Aktorvorrichtung 10 gemäß der ersten Ausführungsform eine Dämpfereinrichtung in Form eines nicht-linearen Dämpfers 92 auf. Der nicht-lineare Dämpfer 92 weist ein erstes Dämpferelement in Form eines Dämpferkolbens 94 und ein zweites Dämpferelement in Form eines Dämpfergehäuses 96 auf, welches beispielsweise als ein Zylinder ausgebildet ist. Der Dämpferkolben 94 ist in die erste Richtung und in die zweite Richtung relativ zu dem Dämpfergehäuse 96 translatorisch bewegbar. Die Dämpferelemente begrenzen dabei jeweils teilweise zwei insbesondere einander gegenüberliegende Dämpferkammern 98 und 100 des Dämpfers 92, wobei die Dämpferkammern 98 und 100 über zwei Verbindungspfade 102 und 104 fluidisch miteinander verbunden oder verbindbar sind. Die Verbindungspfade 102 und 104 sind beispielsweise zumindest teilweise voneinander getrennt.

Der Dämpferkolben 94 ist mit dem ersten Ventilelement 78 bewegungsgekoppelt und somit mit dem Ventilelement 78 insbesondere relativ zu dem Basiselement 72 in die erste Richtung und in die zweite Richtung, insbesondere translatorisch, mit bewegbar. Das Dämpfergehäuse 96 ist beispielsweise in die erste Richtung und in die zweite Richtung relativ zu dem Basiselement 72, insbesondere translatorisch, mit bewegbar. Außerdem ist das Dämpfergehäuse 96 mit den Anschlägen 88 und 90 gekoppelt, sodass das Dämpfergehäuse 96, der Anschlag 88 und der Anschlag 90 gemeinsam beziehungsweise gleichzeitig in die erste Richtung und in die zweite Richtung relativ zu dem Basiselement 72 bewegbar sind. Dabei können beispielsweise die vorherigen und folgenden Ausführungen zu der gemeinsamen Bewegbarkeit des Ventilelements 78 und des Teils T ohne weiteres auch auf den Dämpferkolben 94 und das Ventilelement 78 beziehungsweise auf das Dämpfergehäuse 96 und die Anschläge 88 und 90 übertragen werden und umgekehrt. Wird beispielsweise der Dämpferkolben 94 relativ zu dem Dämpfergehäuse 96 in die erste Richtung translatorisch bewegt, so wird dadurch die Dämpferkammer 100 in ihrem Volumen verkleinert, und die Dämpferkammer 98 wird in ihrem Volumen vergrößert, insbesondere um das Maß, um welches die Dämpferkammer 100 verkleinert wird. Wird der Dämpferkolben 94 in die zweite Richtung relativ zu dem Dämpfergehäuse 96 translatorisch bewegt, so wird dadurch die Dämpferkammer 100 in ihrem Volumen vergrößert, und die Dämpferkammer 98 wird in ihrem Volumen verkleinert, insbesondere um das Maß, um welches die Dämpferkammer 100 in ihrem Volumen vergrößert wird.

In dem Verbindungspfad 102 ist eine Drossel 106 angeordnet, welche beispielsweise als eine verstellbare oder aber starre Drossel ausgebildet sein kann. In dem Verbindungspfad 104 ist ein Rückschlagventil 108 angeordnet, welches in Richtung der Dämpferkammer 100 sperrt und in Richtung der Dämpferkammer 98 öffnet. Somit lässt das Rückschlagventil 108 eine Strömung eines Dämpfungsmediums aus der Dämpferkammer 100 über den Verbindungspfad 104 und das Rückschlagventil 108 in die Dämpferkammer 98 zu. Eine dazu umgekehrte Strömung des Dämpfungsmediums aus der Dämpferkammer 98 über den Verbindungspfad 104 und das Rückschlagventil 108 in die Dämpferkammer 100 wird jedoch durch das Rückschlagventil 108 vermieden. Bei dem auch als Dämpfermedium bezeichneten Dämpfungsmedium handelte es sich beispielsweise um ein Gas oder aber vorzugsweise um eine Flüssigkeit, insbesondere um ein Öl. Wird somit beispielsweise der Dämpferkolben 94 in die erste Richtung relativ zu dem Dämpfergehäuse 96 bewegt, so wird mittels des Dämpferkolbens 94 das zunächst in der Dämpferkammer 100 aufgenommene Dämpferfluid aus der Dämpferkammer 100 herausgefördert, derart, dass das Dämpfungsmedium aus der Dämpferkammer 100 zumindest überwiegend oder vollständig über den Verbindungspfad 104 und das Rückschlagventil 108 in die Dämpferkammer 98 strömt, beispielsweise dadurch, dass das Rückschlagventil 108 öffnet und hierdurch einen Strömungsquerschnitt freigibt, welcher gegenüber der Drossel 106 einen geringeren Strömungswiderstand für das Dämpfungsmedium bewirkt. Somit strömt beispielsweise eine erste Menge des Dämpfungsmediums über den Verbindungspfad 104 in die Dämpferkammer 98, während beispielsweise ein Strömen von Dämpfungsmedium über den Verbindungspfad 102 in die Dämpferkammer 98 unterbleibt oder während eine gegenüber der ersten Menge geringere zweite Menge des Dämpfungsmediums über den Verbindungspfad 102 und somit über die Drossel 106 in die Dämpferkammer 98 strömt.

Wird beispielsweise der Dämpferkolben 94 in die zweite Richtung relativ zu dem Dämpfergehäuse 96, insbesondere translatorisch, bewegt, so wird dadurch zunächst in der Dämpferkammer 98 aufgenommenes Dämpfungsmedium mittels des Dämpferkolbens 94 aus der Dämpferkammer 98 herausgefördert, sodass das aus der Dämpferkammer 98 herausgeförderte Dämpfungsmedium, insbesondere vollständig, über den Verbindungspfad 102 und somit über die Drossel 106 in die Dämpferkammer 100 strömt, insbesondere aufgrund dessen, da das Rückschlagventil 108 den Verbindungspfad 104 für eine von der Dämpferkammer 98 in die Dämpferkammer 100 erfolgende Strömung des Dämpfungsmediums versperrt. Durch relativ zu dem Dämpfergehäuse 96 erfolgendes Bewegen des Dämpferkolbens 94 in die erste Richtung wird der nicht-lineare Dämpfer 92 komprimiert, das heißt längenverkürzt oder gestaucht. Durch relativ zu dem Dämpfergehäuse 96 erfolgendes Bewegen des Dämpferkolbens 94 in die zweite Richtung wird der nicht-lineare Dämpfer 92 gelängt, das heißt expandiert. Da bei dem Komprimieren und Expandieren des Dämpfers 92 das Dämpfungsmedium zwischen den Dämpferkammern 98 und 100 überströmen kann, wird die jeweilige, bei dem Expandieren beziehungsweise Komprimieren des Dämpfers 92 erfolgende Relativbewegung zwischen den Dämpferelementen, insbesondere mittels des Dämpfungsmediums, gedämpft. Die Dämpfung bei dem Expandieren des Dämpfers 92 wird auch als "Zugstufe" bezeichnet, wobei die Dämpfung bei dem Komprimieren des Dämpfers 92 auch als "Druckstufe" bezeichnet wird. Dabei ist es vorgesehen, dass die Druckstufe weicher beziehungsweise weniger steif als die Zugstufe ist. Die Druckstufe weist somit eine erste Dämpfungskonstante auf, wobei die Zugstufe eine zweite Dämpfungskonstante aufweist. Dabei ist die erste Dämpfungskonstante geringer als die zweite Dämpfungskonstante. Die Druckstufe stellt somit bei gleicher Relativgeschwindigkeit zwischen den Dämpferelementen eine geringere Dämpfungskraft bereit als die Zugstufe. Wird somit beispielsweise eine erste Kraft, insbesondere eine erste Druckkraft, auf den Dämpfer 92 ausgeübt, um mittels der ersten Kraft den Dämpfer 92 zu komprimieren, so resultiert daraus eine erste Relativgeschwindigkeit, mit welcher sich die Dämpferelemente bei dem Komprimieren des Dämpfers 92 relativ zueinander translatorisch bewegen. Wird dann beispielsweise eine zweite Kraft, insbesondere eine zweite Zugkraft, auf den Dämpfer 92 ausgeübt, um den Dämpfer 92 mittels der zweiten Kraft zu expandieren, so resultiert daraus eine zweite Relativgeschwindigkeit, mit welcher sich die Dämpferelemente beim Expandieren des Dämpfers 92 relativ zueinander bewegen. Da nun die Druckstufe weniger stark, weniger steif oder weicher als die Zugstufe des Dämpfers 92 ist, das heißt da die Dämpfungskonstante der Druckstufe geringer als die Dämpfungskonstante der Zugstufe ist, ist die erste Relativgeschwindigkeit größer als die zweite Relativgeschwindigkeit, wenn die zweite Kraft hinsichtlich ihres mathematischen Betrags der ersten Kraft entspricht. Somit werden Komprimierungen des Dämpfers 92 weniger stark gedämpft als Expansionen des Dämpfers 92. Die Bewegung des Teils T relativ zu dem Basiselement 72 in die erste Richtung wird beispielsweise auch als positive Auslenkung des Teils T bezeichnet. Die Bewegung des Teils T relativ zu dem Basiselement 72 in die zweite Richtung wird beispielsweise auch als negative Auslenkung des Aktors 34 beziehungsweise des Teils T bezeichnet. Aus Fig. 1 ist erkennbar, dass der Dämpferkolben 94 mit dem Ventilelement 78 und mit dem Teil T bewegungsgekoppelt ist, sodass beispielsweise dann, wenn der Teil T und das Ventilelement 78 relativ zu dem Basiselement 72 in die erste Richtung mit einer siebten Geschwindigkeit und/oder einem siebten Weg, insbesondere translatorisch, bewegt wird, der Dämpferkolben 94 in die erste Richtung beziehungsweise in die zweite Richtung relativ zu dem Basiselement 72 mit einer achten Geschwindigkeit und/oder einem achten Weg, insbesondere translatorisch, bewegt wird, wobei die siebte Geschwindigkeit der achten Geschwindigkeit und der siebte Weg dem achten Weg entspricht.

Dem Dämpfer 92 ist ein Federelement 110 zugeordnet, welches einerseits mit dem Dämpferkolben 94 und andererseits mit dem Dämpfergehäuse 96 gekoppelt ist. Das Federelement 110 ist beispielsweise als eine mechanische Feder ausgebildet. Wird beispielsweise der Dämpferkolben 94 in die erste Richtung relativ zu dem Dämpfergehäuse 96 bewegt, sodass der Dämpfer 92 komprimiert wird, so wird das Federelement 110 gespannt, insbesondere komprimiert. Wird der Dämpferkolben 94 in die zweite Richtung relativ zu dem Dämpfergehäuse 96 bewegt, sodass der Dämpfer 92 expandiert wird, so wird dadurch das Federelement 110 entspannt, insbesondere expandiert. Insbesondere dann, wenn das Federelement 110 gespannt ist, kann das Federelement 110 eine Federkraft bereitstellen, mittels welcher insbesondere dann, wenn dem Federelement 110 eine hinreichend lange Zeit gelassen wird, der Dämpfer 92 expandiert werden kann.

In Fig. 2 sind drei Abstände s1, s2 und s3 gezeigt. Der Abstand s1 verläuft parallel zur ersten beziehungsweise zweiten Richtung und ist ein Abstand zwischen den Anschlägen 86 und 88. Der Abstand s2 verläuft ebenfalls parallel zur ersten beziehungsweise zweiten Richtung und somit parallel zu dem Abstand s1 und ist ein Abstand zwischen den Anschlägen 86 und 90. Der Abstand s3 verläuft ebenfalls parallel zur ersten beziehungsweise zweiten Richtung und somit parallel zu den Abständen s1 und s2 und ist ein Abstand zwischen dem Anschlag 90 und dem Basiselement 72. Ist der Abstand s1 größer als 0, so sind die Anschläge 86 und 88 entlang der ersten beziehungsweise zweiten Richtung voneinander beabstandet, das heißt geöffnet. Ist der Abstand s1 jedoch 0, so befinden sich die Anschläge 86 und 88 in gegenseitigem Kontakt, sodass die Anschläge 86 und 88 geschlossen sind. Entsprechendes gilt für den Abstand s2. Ist der Abstand s2 größer als 0, so sind die Anschläge 86 und 90 voneinander beabstandet und somit geöffnet. Ist der Abstand s2 0, so befinden sich die Anschläge 86 und 88 in gegenseitigem Kontakt, sodass sie geschlossen sind. Ist der Abstand s3 größer als 0, so ist der Anschlag 90 von dem einen vierten Anschlag darstellenden Basiselement 72 beabstandet, sodass der Anschlag 90 und das als vierter Anschlag fungierende Basiselement 72 geöffnet sind. Ist der Abstand s3 jedoch 0, so befindet sich der Anschlag 90 in Kontakt mit dem Basiselement 72, der Anschlag 90 und das als vierter Anschlag fungierende Basiselement 72 geschlossen sind. Die Anschläge 88 und 90 sind gemeinsam beziehungsweise gleichzeitig in die erste beziehungsweise zweite Richtung relativ zu dem Basiselement 72 bewegbar und dabei beispielsweise mit dem Dämpfergehäuse 96 mit bewegbar. Außerdem ist der Anschlag 86 in die erste beziehungsweise zweite Richtung relativ zu dem Basiselement 72 und relativ zu den Anschlägen 88 und 90 bewegbar, insbesondere mit der Stelle S2, dem Ventilelement 80 und/oder dem Förderelement 40. Dadurch können die Abstände s1, s2 und s3 variieren, sodass die Abstände s1, s2 und s3 jeweils den Wert 0 und gegenüber 0 größere Werte einnehmen können. Vorzugsweise ist das Federelement 110 stärker als das Federelement 74, sodass beispielsweise das Federelement 110 eine erste Federkonstante und das Federelement 74 eine zweite Federkonstante aufweist, wobei die erste Federkonstante größer als die zweite Federkonstante ist.

Fig. 3 zeigt die Aktorvorrichtung 10 beziehungsweise eine Randbedingung vor der beziehungsweise einer Aktuierung des Aktors 34. Gemäß Fig. 3 unterbleibt beispielsweise eine Ansteuerung des Aktors 34 beziehungsweise eine Versorgung des Aktors 34 mit elektrischer Spannung und die Ventileinrichtung 76 ist beispielsweise geöffnet. Außerdem ist es vorzugsweise vorgesehen, dass die Abstände s1 und s3 0 betragen, sodass die Anschläge 86 und 88 in gegenseitigem Kontakt sind, und sodass der Anschlag 90 und das Basiselement 72 in gegenseitigem Kontakt sind. Fig. 3 zeigt die Aktorvorrichtung 10 beispielsweise zu einem ersten Zeitpunkt t0, zu welchem beispielsweise das Federelement 110 und/oder der Dämpfer 92 eine erste Länge oder eine erste Auslenkung aufweist, welche in Fig. 3 mit $S_{f2\_t0}$ bezeichnet ist. Zu dem Zeitpunkt t0 drückt das Federelement 74 den Anschlag 86 gegen den Anschlag 88, sodass sich die Anschläge 86 und 88 gegenseitig berühren, und das Federelement 110 drückt den Anschlag 90 gegen das Basiselement 72, sodass der Abstand s3 0 ist. Da das Federelement 110 stärker als das Federelement 74 ist, bleibt der Anschlag 90 in Kontakt mit dem Basiselement 72 beziehungsweise bleibt der Abstand s3 0. Zu dem Zeitpunkt t0 ist die beispielsweise als mechanisch gesteuertes Ventil ausgebildete Ventileinrichtung 76 offen, und der Teil T ist beispielsweise um die Hälfte des maximalen Hubs ausgelenkt, damit der Teil T durch Versorgen des Aktors 34 mit der elektrischen Spannung maximal ausgelenkt werden kann. Somit ist es beispielsweise zu dem Zeitpunkt t0 vorgesehen, dass der Aktor 34 mit einer elektrischen Spannung versorgt wird, insbesondere derart, dass der Teil T um die Hälfte seines maximalen Hubs ausgelenkt ist. Beispielsweise benötigt oder vollführt der Aktor 34 eine Auslenkung oder es wird eine solche Auslenkung des Aktors 34 bewirkt, die minimal größer als die Öffnung der Ventileinrichtung 76 ist beziehungsweise minimal größer als zur Öffnung der Ventileinrichtung erforderlich ist, also minimal größer als der Abstand zwischen den Ventilelementen 78 und 80 ist, insbesondere entlang der jeweiligen Bewegungsrichtung betrachtet. Somit kann die benötigte Auslenkung des Aktors 34 theoretisch mindestens 40 oder 60%, insbesondere des maximalen Hubs sein. Das hängt nur vom eingestellten Abstand der Ventileinrichtung 76 im geöffneten Zustand ab. Vorteilhaft ist allerdings eine notwendige Öffnung der Ventileinrichtung 76 von mindestens 50% der max. Auslenkung beziehungsweise des maximalen Hubs des Aktors 34, da ansonsten der Öffnungsquerschnitt der Ventileinrichtung 76 beim Ablassen des Fluids aus der Abtriebskammer 18 gering ist und somit das Abfließen länger dauert.

Dies bedeutet beispielsweise, dass der Teil T zwischen einer minimalen Auslenkung und einer maximalen Auslenkung bewegbar ist, wobei die maximale Auslenkung auch als maximaler Hub bezeichnet wird. Durch Versorgen des Aktors 34 mit elektrischer Energie beziehungsweise elektrischer Spannung kann beispielsweise der Teil T von der minimalen Auslenkung ausgehend maximal ausgelenkt und somit um seine maximale Auslenkung ausgelenkt werden. Wird beispielsweise ein Versorgen des Aktors 34 mit elektrischer Spannung unterbunden, so kann der Teil T seine minimale Auslenkung, welche auch als Nullposition oder Ausgangsstellung bezeichnet wird, einnehmen. Wird der Teil T ausgehend von der minimalen Auslenkung um die maximale Auslenkung ausgelenkt, so legt der Teil T eine Strecke zurück, die beispielsweise bei der minimalen Auslenkung beginnt und bei der maximalen Auslenkung endet. Ist der Teil T um 50 Prozent der maximalen Auslenkung ausgelenkt, so befindet sich der Teil T auf der Hälfte der zuvor genannten Strecke. Dies ist beispielsweise bei dem Zeitpunkt t0 der Fall. Beispielsweise ist die insbesondere von der minimalen Auslenkung ausgehende Auslenkung des Teils T desto größer, je größer die elektrische Spannung ist, mit der der Aktor 34 versorgt wird. Um beispielsweise die minimale Auslenkung des Teils T einzustellen, beträgt die elektrische Spannung, mit welcher der Aktor 34 versorgt wird, 0. Um beispielsweise die maximale Auslenkung des Teils T zu bewirken, weist die elektrische Spannung einen, ihren oder den Maximalwert auf. Um den Teil T maximal ausgelenkt zu halten, wird der Aktor 34 zumindest im Wesentlichen kontinuierlich mit der den Auslenkungswert aufweisenden Spannung versorgt. Um beispielsweise den Teil T um 50 Prozent der maximalen Auslenkung auszulenken, wird beispielsweise ein weiterer Auslenkungswert der elektrischen Spannung, mit welcher der Aktor 34 versorgt wird, eingestellt, wobei der weitere Auslenkungswert beispielsweise 50 Prozent des vorzugsweise gegenüber 0 größeren ersten Auslenkungswerts beträgt.

Fig. 3 zeigt die Aktorvorrichtung 10 zu einem zweiten Zeitpunkt t1, welcher zeitlich auf den ersten Zeitpunkt t0 folgt. Bei der elektrischen Spannung, mit welcher der Aktor 34 versorgt wird, handelt es sich beispielsweise um eine elektrische Gleichspannung, welche auch als DC oder DC-Spannung bezeichnet wird. Wird beispielsweise die Spannung, mit welcher der Aktor 34 beispielsweise zu dem Zeitpunkt t0 versorgt wird, in ihrem Wert beziehungsweise Auslenkungswert erhöht, so wird dadurch der Teil T ausgehend von dem ersten Zeitpunkt t0 weiter ausgelenkt, wodurch eine Länge beziehungsweise Längenvergrößerung des Aktors 34 bewirkt wird. Mit anderen Worten wird hierdurch der Teil T in die erste Richtung relativ zu dem Basiselement 72 bewegt. Hierdurch wird - wie aus einer Zusammenschau von Fig. 3 und 4 erkennbar ist - die Ventileinrichtung 76 geschlossen, sodass sich die Ventileinrichtung 76 zu dem zweiten Zeitpunkt t1 in ihrem Schließzustand S befindet. Hierbei weist das Federelement 110 beziehungsweise der Dämpfer 92 eine zweite Auslenkung oder zweite Länge $S_{F2\_t1}$ auf, welche geringer als die Länge beziehungsweise Auslenkung $s_{F2\_t0}$ zu dem Zeitpunkt t0 ist. Mit anderen Worten gilt: $s_{F2\_t1} < s_{F2\_t0}$

Die Druckstufe des Dämpfers 92 ist weicher beziehungsweise weniger hart oder weniger steif als die Zugstufe. Mit anderen Worten ist die Zugstufe des Dämpfers 92 härter beziehungsweise steifer als die Druckstufe, da bei dem Komprimieren des Dämpfers 92 das Rückschlagventil 108 öffnet und beim Expandieren des Dämpfers 92 das Rückschlagventil 108 schließt. Ausgehend von dem Zeitpunkt t0 kann durch relativ zu dem Basiselement 72 erfolgendes Bewegen des Teils T in die erste Richtung der Dämpfer 92 komprimiert und dadurch das Ventilelement 78 in die erste Richtung relativ zu dem Basiselement 72 bewirkt und auf das Ventilelement 80 zu bewegt und dadurch die Ventileinrichtung 76 geschlossen werden, während die Abstände s1 und s3 null bleiben, da der Dämpfer 92 bei seiner Komprimierung hinreichend weich und insbesondere weicher als bei seiner Expansion ist.

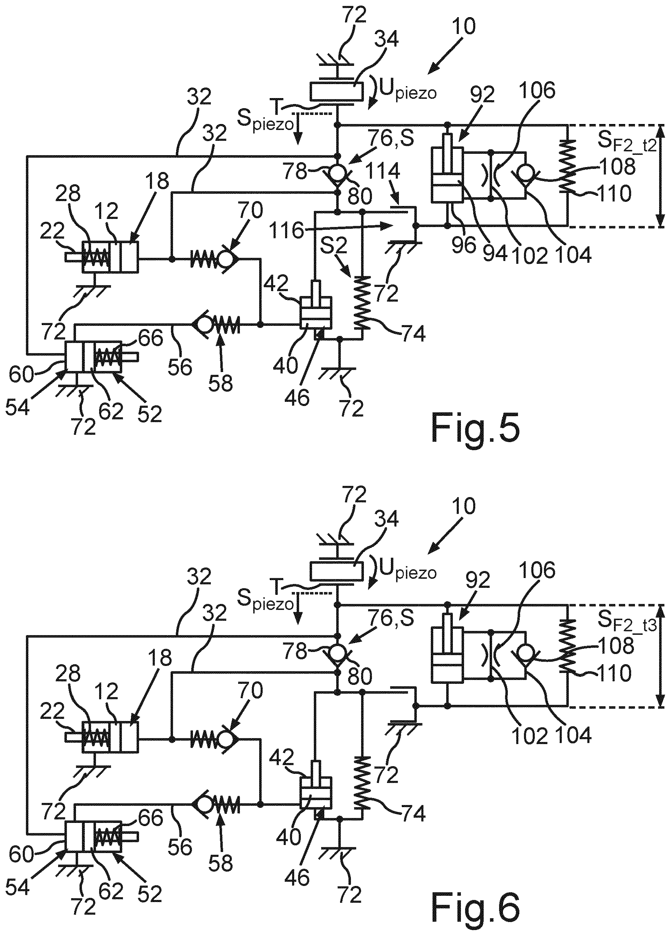

Fig. 5 und 6 veranschaulichen das Pumpen des Fluids in die Abtriebskammer 18, während die Ventileinrichtung 76 geschlossen ist und geschlossen bleibt. Nach dem zuvor beschriebenen Schließen der Ventileinrichtung 76 zu dem zweiten Zeitpunkt t1 und insbesondere nach dem Anlegen der DC-Spannung an den Aktor 34 wird beispielsweise die elektrische Spannung als eine elektrische Wechselspannung (AC-Spannung) an den Aktor 34 angelegt, um den auch als Pumpvorgang bezeichneten Pumpbetrieb zu starten, das heißt zu bewirken. Wird also ausgehend von dem Zeitpunkt t1 die Spannung, mit welcher der Aktor 34 versorgt wird, weiter erhöht, insbesondere im Rahmen der zuvor genannten Wechselspannung, so wird der Teil T weiter ausgelenkt, das heißt in die erste Richtung relativ zu dem Basiselement 72 bewegt. Da hierbei die Ventileinrichtung 76 geschlossen ist, wird durch relativ zu dem Basiselement 72 erfolgendes Bewegen des Teils T und des Ventilelements 78 in die erste Richtung auch das Förderelement 40 und beispielsweise auch die zweite Stelle S2 in die erste Richtung, insbesondere relativ zu dem Basiselement 72 bewegt. Hierdurch wird die Förderkammer 46 in ihrem Volumen verkleinert beziehungsweise mittels des Förderelements 40 wird Fluid aus der Förderkammer 46 herausgefördert und in die Abtriebskammer 18 gepumpt. Das Volumen der Förderkammer 46 wird auch als Antriebs- oder Fördervolumen bezeichnet, welches durch das beschriebene Auslenken des Teils T über die Ventileinrichtung 76 verkleinert wird. Bei dieser relativ zu dem Basiselement 72 erfolgenden Bewegung des Teils T und des Ventilelements 78 in die erste Richtung wird der nicht-lineare Dämpfer 92, insbesondere weiter, komprimiert, da seine Druckstufe weich ist und da eine relativ zu dem Basiselement 72 in die erste Richtung erfolgende Bewegung des Dämpfergehäuses 96 dadurch unterbunden beziehungsweise vermieden wird, dass sich der Anschlag 90 entlang der ersten Richtung in Kontakt mit dem Basiselement 72 befindet beziehungsweise an dem Basiselement 72 abgestützt ist. In der Folge kommt es zu einem zeitlich auf den Zeitpunkt t1 folgenden und in Fig. 5 gezeigten dritten Zeitpunkt t2 zu einer solchen, mit $s_{F2\_t2}$ bezeichneten Auslenkung oder Länge des Federelements 110 beziehungsweise des Dämpfers 92, dass gilt: $s_{F2\_t2} < s_{F2\_t1}$. Da dabei das Förderelement 40 in die erste Richtung relativ zu dem Basiselement 72 und auch relativ zu dem Dämpfergehäuse 96, insbesondere translatorisch, bewegt wird, wird der Anschlag 86 von dem Anschlag 88 weg bewegt, wodurch der Abstand s1 größer als 0 wird beziehungsweise zu dem Zeitpunkt t2 größer als 0 ist. Mit anderen Worten sind die Anschläge 86 und 88 zu dem Zeitpunkt t2 voneinander beabstandet.

Da der Aktor 34 während des Pumpbetriebs beziehungsweise zur Realisierung des Pumpbetriebs mit der zuvor genannten und vorzugsweise als Wechselspannung ausgebildeten Spannung betrieben wird, sodass beispielsweise abwechselnd unterschiedlich große Werte der elektrischen Spannung, mit welcher der Aktor 34 versorgt wird, eingestellt werden, wobei es vorzugsweise vorgesehen ist, dass zumindest einer der Werte größer als 0 und auch der andere Wert größer als 0 und von dem einen Wert unterschiedlich ist, wobei der andere Wert auch 0 sein kann, wird der Teil T während des Pumpbetriebs abwechselnd relativ zu dem Basiselement 72 in die erste Richtung und in die zweite Richtung bewegt. Um also das Förderelement 40, mittels welchem das Fluid in die Abtriebskammer 18 gefördert wurde, in die zweite Richtung beziehungsweise in die zweite Förderrichtung relativ zu dem Basiselement 72 und insbesondere relativ zu dem Fördergehäuse 42 zu bewegen, um so neues Fluid in die Förderkammer 46 hineinfördern, insbesondere einsaugen, zu können, wird die Spannung, mit welcher der Aktor 34 versorgt wird, reduziert. Dadurch wird bewirkt, dass sich der Teil T relativ zu dem Basiselement 72 in die zweite Richtung bewegt. Dies wird auch als Zurückziehen oder Längenverkürzen des Aktors 34 bezeichnet. Aufgrund der Ansteuerung des Aktors 34 mit Wechselspannung existiert nur eine kurze Phase, während welcher sich der Aktor 34 beziehungsweise der Teil T bis zu einer darauffolgenden Erhöhung der Spannung zurückziehen kann. Da der nicht-lineare Dämpfer bei seiner Expansion und somit beim Zurückziehen des Aktors 34 während der kurzen Zeitspanne sehr steif ist, bewirkt das Förderelement 110 während der kurzen Zeitspanne keine oder nur eine sehr geringe Expansion des Dämpfers 92 wodurch - wie aus Fig. 6 anhand eines dort gezeigten, auf den Zeitpunkt t2 folgenden Zeitpunkt t3 gezeigt ist - die Ventileinrichtung 76 geschlossen bleibt und der Anschlag 90, insbesondere in die zweite Richtung, von dem Basiselement 72 weg bewegt wird, mithin der Abstand s3 größer als 0 wird oder ist. Dabei wird oder ist auch der Abstand s1 größer als 0 beziehungsweise der Anschlag 86 von dem Anschlag 88 beabstandet, wodurch das Federelement 74 beziehungsweise dessen Federkraft freigegeben wird und somit einerseits das Fluid über das als Saugventil ausgebildete beziehungsweise fungierende Rückschlagventil 58 in die Förderkammer 46 gesaugt wird und andererseits währenddessen die Ventileinrichtung 76 geschlossen bleibt. Insbesondere zeigen Fig. 4 und 5 jeweilige Zustände oder Stellungen der Aktorvorrichtung 10, wobei sich in dem Pumpbetrieb die in Fig. 5 und 6 gezeigten Zustände oder Stellungen mehrmals aufeinanderfolgend abwechseln. Hierdurch kann abwechselnd Fluid aus der Förderkammer 46 in die Abtriebskammer 18 gefördert und aus der Reservoirkammer 54 in die Förderkammer 46 gefördert werden. Mit anderen Worten wird in dem Pumpbetrieb durch die Ansteuerung des Aktors 34 mit der als Wechselspannung ausgebildeten, elektrischen Spannung zwischen den in Fig. 5 und 6 gezeigten Zuständen der Aktorvorrichtung 10 abwechselnd und aufeinanderfolgend gewechselt, wodurch das Fluid in die Abtriebskammer 18 gefördert wird. Hierzu werden die Ventilelemente 78 und 80 und mit diesen das Förderelement 40 in die erste Richtung und in die zweite Richtung abwechselnd bewegt und somit hin- und her bewegt, wobei hierbei der Dämpfer 92 und somit die Dämpferelemente sowie die Anschläge 86, 88 und 90 zumindest im Wesentlichen als Block in die erste Richtung und in die zweite Richtung relativ zu dem Basiselement 72 mitbewegen. Da die Zugstufe des nicht-linearen Dämpfers 92 stärker beziehungsweise steifer als die Druckstufe ist, kommt es bei dem Zurückziehen des Aktors 34 nicht oder nur zu einer sehr geringfügigen Expansion des Dämpfers 92, sodass sich die Ventilelemente 78 und 80 nicht oder nicht so weit voneinander weg bewegen, dass die Ventileinrichtung 76 geöffnet wird. Die Ventileinrichtung 76 bleibt somit bei dem hin- und her bewegen des Förderelements 40 und der Ventilelemente 78 und 80 geschlossen. Dabei weist das Federelement 110 beziehungsweise der Dämpfer 92 zu dem Zeitpunkt t3 eine Länge beziehungsweise Auslenkung auf, welche mit $s_{F2\_t3}$ bezeichnet ist. Da die Zugstufe des Dämpfers 92 steifer beziehungsweise härter ist als die Druckstufe, kommt es beim Zurückziehen des Aktors 34 nicht zu einer wesentlichen Expansion des Dämpfers 92, sodass zu dem dritten Zeitpunkt t3 gilt: $s_{F2\_t2} = s_{F2\_t3}$ oder $s_{F2\_t2} \approx s_{F2\_t3}$. Durch Fördern des Fluids in die Abtriebskammer 18 wird das Abtriebselement 12 in die Haltestellung bewegt. Soll beispielsweise dann eine weitere Bewegung des Abtriebselements 12 unterbleiben und das Abtriebselement 12 in der Haltestellung gehalten werden, so wird dann der Aktor 34 beispielsweise wieder mit einer Gleichspannung angesteuert, wodurch die Ventileinrichtung 76 geschlossen gehalten wird.

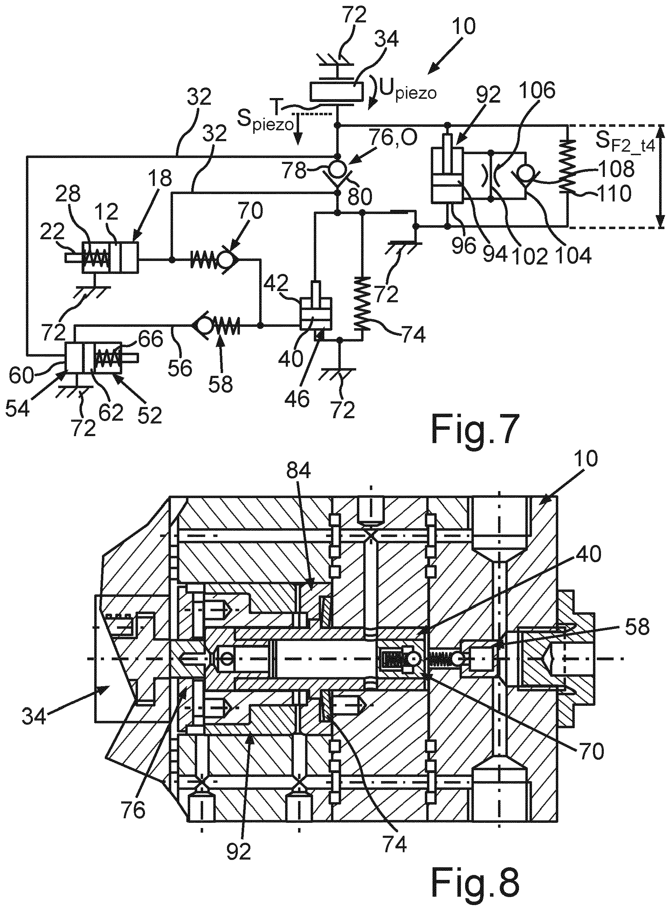

Um beispielsweise eine Bewegung des Abtriebselements 12 aus der Haltestellung in die Ausweichstellung zuzulassen und hierzu die Ventileinrichtung 76 zu öffnen, wird beispielsweise die zuvor eingestellte und insbesondere als Gleichspannung ausgebildete Spannung, insbesondere langsam, abgesenkt, insbesondere auf 0. Dann ermöglicht das Federelement 110 beziehungsweise dessen Federkraft ein Extrahieren des nicht-linearen Dämpfers 92, sodass der Dämpfer 92 beziehungsweise das Federelement 110 zu einem in Fig. 7 gezeigten und auf den Zeitpunkt t3 folgenden fünften Zeitpunkt t4 eine Länge beziehungsweise Auslenkung $s_{F2\_t4}$ aufweist. Dann gilt beispielsweise: $s_{F2\_t4} > s_{F2\_t3}$. In der Folge kann das Fluid aus der Abtriebskammer 18 in die Reservoirkammer 54 strömen. Das Absenken der Spannung kann alternativ schnell erfolgen. Dann würde sich der Anschlag 90 von dem Basiselement 72 abheben, jedoch muss dann erst das Federelement 110 den Dämpfer extrahieren (dauert "etwas" länger als die Pumpfrequenz), um die Ventileinrichtung zu öffnen

Das Zeitverhalten des Öffnens der Ventileinrichtung 76 hängt dabei vom Zeitbeziehungsweise Dämpfungsverhalten des nicht-linearen Dämpfers 92, insbesondere in Zugrichtung beziehungsweise bezüglich der Zugstufe ab. Dieses Zeitbeziehungsweise Dämpfungsverhalten sollte auf eine Frequenz abgestimmt sein, mit welcher in dem Pumpbetrieb das Förderelement 40 und mit diesem beispielsweise die Ventilelemente 78 und 80 abwechselnd in die erste Richtung und in die zweite Richtung bewegt, das heißt hin- und her bewegt werden. Da hierdurch das Fluid gepumpt wird, wird die Frequenz auch als Pumpfrequenz bezeichnet. Das Zeitverhalten sollte auf die Pumpfrequenz abgestimmt sein, da ein zu schnelles Auseinanderziehen beziehungsweise Expandieren des Dämpfers 92 bei zu langsamen Pumpen, das heißt wenn in dem Pumpbetrieb eine übermäßig lange Zeit zwischen dem Absenken der Spannung und einem darauffolgenden Anheben der Spannung liegt, ein Öffnen der Ventileinrichtung 76 zur Folge hätte. Fig. 8 zeigt eine zweite Ausführungsform der Aktorvorrichtung 10. Insbesondere ist aus Fig. 8 eine mechanische Umsetzung der Aktorvorrichtung 10 erkennbar.

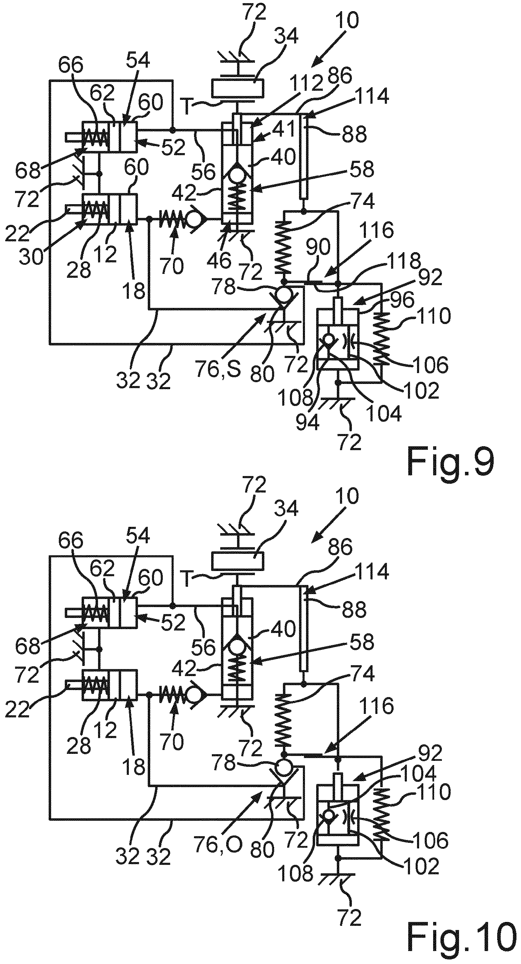

Fig. 9 bis 13 veranschaulichen eine dritte Ausführungsform der Aktorvorrichtung 10. Bei der dritten Ausführungsform ist das auch als Antriebskolben oder Förderkolben bezeichnete Förderelement 40 unter Umgehung der Ventileinrichtung 76 mit dem Teil T des Aktors 34 bewegungsgekoppelt, insbesondere direkt beziehungsweise derart, dass dann, wenn der Teil T mit einer neunten Geschwindigkeit und/oder einem neunten Weg in die erste beziehungsweise zweite Richtung relativ zu dem Basiselement 72 bewegt wird, daraus resultierend das Förderelement 40 in die erste beziehungsweise zweite Richtung relativ zu dem Basiselement 72 mit einer zehnten Geschwindigkeit und/oder einem zehnten Weg bewegt wird, wobei der neunte Weg dem zehnten Weg beziehungsweise die neunte Geschwindigkeit der zehnten Geschwindigkeit entspricht. Um beispielsweise bei der ersten und zweiten Ausführungsform das Förderelement 40 mittels des Teils T zu bewegen, stellt der Teil T eine Betätigungskraft bereit, welche über einen Übertragungspfad von dem Teil T auf das Förderelement 40 übertragen wird, insbesondere um dadurch das Förderelement 40 in die erste Förderrichtung beziehungsweise in die erste Richtung relativ zu dem Basiselement 72, insbesondere translatorisch, zu bewegen. Bei der ersten und zweiten Ausführungsform ist die Ventileinrichtung 76 in dem Übertragungspfad angeordnet. Bei der dritten Ausführungsform ist die Ventileinrichtung 76 außerhalb des Übertragungspfads angeordnet, sodass die von dem Teil T bereitgestellte Betätigungskraft zum Bewegen des Förderelements 40 die Ventileinrichtung 76, das heißt die Ventilelemente 78 und 80 umgeht und somit nicht auf ihrem Weg von dem Teil T zu dem Förderelement 40 über die Ventilelemente 78 und 80 beziehungsweise durch diese hindurch verläuft.

Außerdem ist es bei der dritten Ausführungsform vorgesehen, dass das als Saugventil ausgebildete beziehungsweise fungierende Rückschlagventil 58 in dem als Förderkolben ausgebildeten Förderelement 40 aufgenommen und somit in das Förderelement 40 integriert ist. Somit ist beispielsweise das Rückschlagventil 58 mit dem Förderelement 40 in die erst beziehungsweise zweite Förderrichtung, insbesondere relativ zu dem Basiselement 72 und/oder translatorisch mit bewegbar. Außerdem verläuft zumindest ein Teil des Kanals 56 durch das Förderelement 40 und insbesondere durch eine weitere Kammer 112 hindurch, die der Förderkammer 46 gegenüberliegt und/oder jeweils teilweise durch das Förderelement 40 und das Fördergehäuse 42 begrenzt ist. Das Fluid strömt somit auf seinem Weg von der Reservoirkammer 54 zu der beziehungsweise in die Förderkammer 46 durch die Kammer 112 und durch das Förderelement 40, in welchem das in dem Kanal 56 angeordnete Rückschlagventil 58 angeordnet ist. Des Weiteren ist es bei der dritten Ausführungsform vorgesehen, dass das Ventilelement 80 zumindest in die erste Richtung und in die zweite Richtung an dem Basiselement 72 festgelegt ist, sodass in die erste Richtung und in die zweite Richtung relativ zu dem Basiselement 72 erfolgende, insbesondere translatorische, Relativbewegungen zwischen dem Ventilelement 80 und dem Basiselement 72 verhindert sind. Außerdem sind die Verbindungspfade 102 und 104 und somit die Drossel 106 und das Rückschlagventil 108 in dem Dämpferkolben 94 angeordnet und somit mit dem Dämpferkolben 94 insbesondere relativ zu dem Dämpfergehäuse 96, insbesondere translatorisch, mit bewegbar.

Bei der ersten Ausführungsform bilden beispielsweise die Anschläge 86 und 88 ein erstes Anschlagpaar 114, welches auch als erster Kontakt bezeichnet wird. Dabei ist unter dem Merkmal, dass die Anschläge 86 und 88 voneinander beabstandet sind beziehungsweise dass der Abstand s1 größer als 0 ist, zu verstehen, dass das Anschlagpaar 114 beziehungsweise der erste Kontakt geöffnet ist. Bei der dritten Ausführungsform umfasst das Anschlagpaar 114 ebenfalls die Anschläge 86 und 88. Außerdem bilden bei der ersten Ausführungsform der Anschlag 90 und das Basiselement 72 ein zweites Anschlagpaar 116, welche auch als zweiter Kontakt bezeichnet wird. Unter dem Merkmal, dass der Abstand s3 größer als 0 ist beziehungsweise dass der Anschlag 90 und das Basiselement 72 voneinander beabstandet sind, kann insbesondere verstanden werden, dass das Anschlagpaar 116 beziehungsweise der zweite Kontakt geöffnet ist. Bei der dritten Ausführungsform umfasst das Anschlagpaar 116 den Anschlag 90 und einen Anschlag 118, welcher ebenfalls als Anschlagelement bezeichnet wird. Die Anschläge 88 und 118 sind, insbesondere gemeinsam beziehungsweise gleichzeitig, relativ zu dem Basiselement 72 in die erste Richtung und in die zweite Richtung insbesondere zusammen mit dem Dämpferkolben 94 und somit beispielsweise relativ zu dem Dämpfergehäuse 96, insbesondere translatorisch, bewegbar. Bei der dritten Ausführungsform ist das Dämpfergehäuse 96 zumindest in die erste Richtung und in die zweite Richtung an dem Basiselement 72 festgelegt. Der Anschlag 90 ist mit dem Ventilelement 78 gekoppelt und dabei beispielsweise gemeinsam beziehungsweise gleichzeitig mit dem Ventilelement 78 in die erste Richtung und in die zweite Richtung relativ zu dem Basiselement 72 bewegbar. Der Anschlag 86 ist mit dem Teil T und dem Förderelement 40 gekoppelt, insbesondere bewegungsgekoppelt, sodass beispielsweise der Teil T, das Förderelement 40 und der Anschlag 86 in die erste Richtung und in die zweite Richtung relativ zu dem Basiselement 72, insbesondere translatorisch, bewegbar sind. Bei der ersten Ausführungsform bilden beispielsweise die Anschläge 86 und 90 ein drittes Anschlagpaar, welches bei der dritten Ausführungsform entfällt. Insbesondere ist der Anschlag 88 durch einen Stößel gebildet, welcher zum Betätigen der Ventileinrichtung 76 und des nicht-linearen Dämpfers 92, insbesondere im Hinblick auf dessen Komprimierung, genutzt wird und hierzu insbesondere über den Anschlag 88 mittels des Teils T in die erste Richtung, insbesondere relativ zu dem Basiselement 72 und/oder translatorisch, bewegbar ist beziehungsweise bewegt wird.

Fig. 10 zeigt die Aktorvorrichtung 10 in einem offenen Zustand, sodass beispielsweise Fig. 10 Fig. 1 oder Fig. 3 entspricht. In Fig. 10 ist beispielsweise der Aktor 34 spannungsfrei, sodass der Teil T keine Auslenkung beziehungsweise eine minimale Auslenkung einnimmt. Außerdem sind sowohl der erste Kontakt (Anschlagpaar 114) als auch der zweite Kontakt (Anschlagpaar 116) geschlossen, und die auch als Ablassventil bezeichnete oder fungierende Ventileinrichtung 76 ist geöffnet, insbesondere deswegen, da das Federelement 110 stärker als das Federelement 74 ist. Hierdurch drückt das Federelement 110 den Anschlag 118 gegen den Anschlag 90 und außerdem drückt das Federelement 110 den Anschlag 88 gegen den Anschlag 86 . In der Folge dessen wird das Ventilelement 78 über die Anschläge 90 und 118 von dem Ventilelement 80 weg bewegt, sodass das Federelement 110 die Ventileinrichtung 76 geöffnet hält.

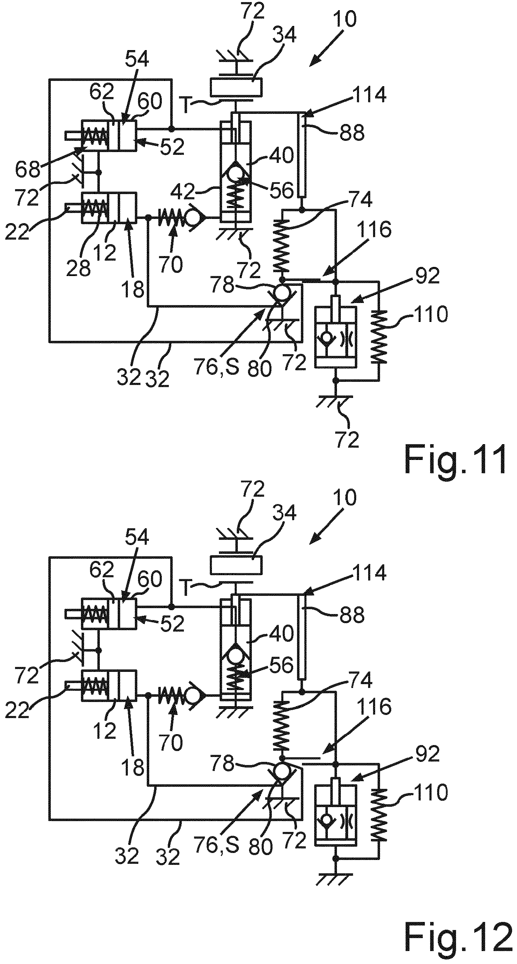

Fig. 11 zeigt den auch als Haltezustand bezeichneten Haltebetrieb, sodass in Fig. 11 beispielsweise die Ventileinrichtung 76 geschlossen ist und mittels des Aktors 34 geschlossen gehalten wird, insbesondere dadurch, dass der Aktor 34 mit der elektrischen Spannung als Gleichspannung versorgt wird, derart, dass der Teil T zumindest im Wesentlichen 50 Prozent seines maximalen Hubs beziehungsweise seiner maximalen Auslenkung einnimmt bzw. so viel dass die Ventileinrichtung geschlossen wird bzw bleibt. In dem Haltezustand beziehungsweise im Haltebetrieb sind ebenfalls der erste Kontakt und der zweite Kontakt geschlossen, wobei beispielsweise durch die Auslenkung des Teils T das Federelement 110 im Vergleich zur Fig. 10 etwas komprimiert ist, sodass das Federelement 110 den zweiten Kontakt geschlossen hält, während die Ventileinrichtung 76 geschlossen ist.

Fig. 12 veranschaulicht das Pumpen des Fluids aus der Förderkammer 46 in die Abtriebskammer 18, wobei hierfür der Aktor 34 mit der als Wechselspannung ausgebildeten, elektrischen Spannung, insbesondere dynamisch, angesteuert wird, insbesondere derart, dass die elektrische Spannung, mit welcher der Aktor 34 angesteuert wird, abwechselnd und aufeinanderfolgend erhöht und verringert wird. Bei beziehungsweise zu dem Fördern des Fluids aus der Förderkammer 46 in die Abtriebskammer 18 ist der erste Kontakt geschlossen, und der zweite Kontakt ist geöffnet, da das Federelement 110 aufgrund des nicht-linearen Dämpfers 92 beziehungsweise dadurch, dass die Zugstufe des nicht-linearen Dämpfers 92 sehr hart und insbesondere härter als die Druckstufe ist, im zweiten Kontakt in dem dynamischen Betrieb nicht schließen kann beziehungsweise eine Zeitspanne zwischen einem Beginn des Absenkens beziehungsweise Verringerns der elektrischen Spannung und einem darauffolgenden Beginn einer Erhöhung der Spannung ist zu gering, als dass das Federelement 110 den Dämpfer 92 derart expandieren und in der Folge den zweiten Kontakt derart schließen könnte, dass es zu einem Öffnen der Ventileinrichtung 76 kommt.

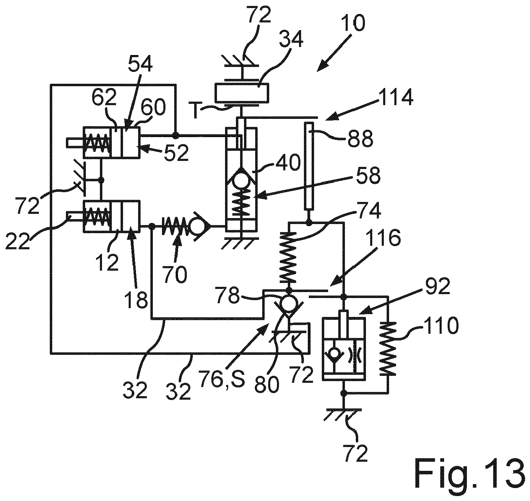

Schließlich veranschaulicht Fig. 13 das Fördern des Fluids aus dem Reservoir 52 in die Förderkammer 46. Hierzu wird in dem dynamischen Pumpbetrieb die als Wechselspannung ausgebildete Spannung, die zum Fördern des Fluids in die Abtriebskammer 18 erhöht wurde, verringert, wodurch der Teil T und mit diesem das Förderelement 40 in die zweite Richtung relativ zu dem Fördergehäuse 42 bewegt werden. Diese Bewegung erfolgt schneller, als ein durch das Federelement 110 bewirktes oder bewirkbares und zum Schließen beziehungsweise geschlossen Halten des zweiten Kontakts erforderliches Expandieren des Dämpfers 92, sodass der Dämpfer 92 die Ventileinrichtung 76 geschlossen hält, der erste Kontakt geöffnet wird beziehungsweise ist und auch der zweite Kontakt geöffnet wird beziehungsweise geöffnet ist. Im Pumpbetrieb werden somit das Förderelement 40 und der Anschlag 86 mittels des Teils T derart schnell abwechselnd in die erste Richtung und in die zweite Richtung bewegt und somit hin- und her bewegt, dass ein Öffnen der Ventileinrichtung 76 unterbleibt. Beim Fördern des Fluids in die Abtriebskammer 18 wird der erste Kontakt geschlossen, während der zweite Kontakt geöffnet bleibt, und beim Fördern des Fluids in die Förderkammer 46 werden der erste Kontakt und der zweite Kontakt geöffnet, sodass beide Kontakte gleichzeitig geöffnet sind. Der nicht-lineare Dämpfer 92, insbesondere dessen Nicht-Linearität beziehungsweise Tiefpassverhalten verhindert übermäßige Auslenkungen der Federelemente 74 und 110 derart, dass das Ablassventil geschlossen ist und bleibt.

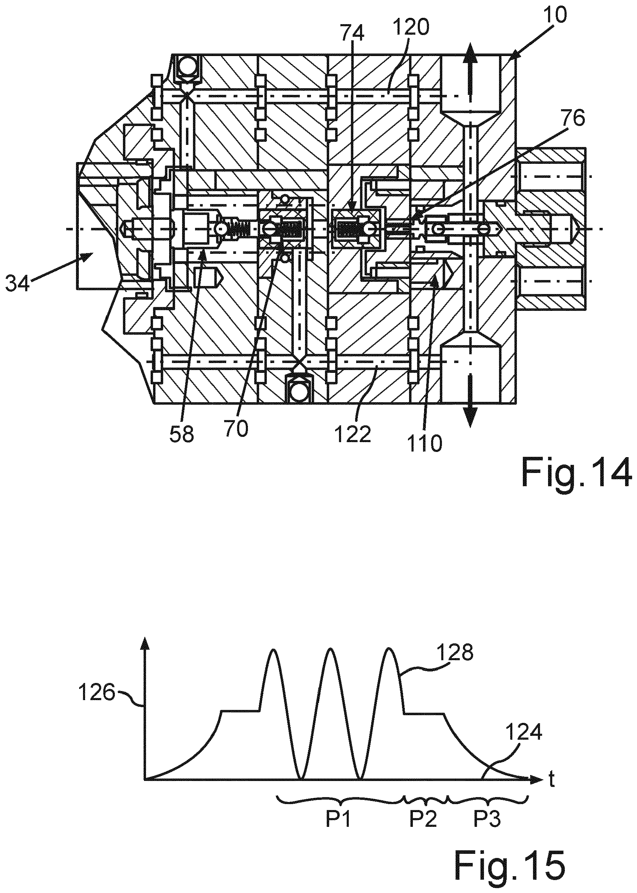

Fig. 14 zeigt eine vierte Ausführungsform der Aktorvorrichtung 10. insbesondere veranschaulicht Fig. 14 eine mechanische Umsetzung der Aktorvorrichtung 10. Ein fluidisch mit dem Reservoir 52 verbundener Anschluss ist in Fig. 14 mit 120 bezeichnet und ein fluidisch mit der Abtriebskammer 18 verbundener Anschluss ist in Fig. 14 mit 122 bezeichnet.

Fig. 15 zeigt ein Diagramm auf dessen Abszisse 124 die Zeit aufgetragen ist Auf der Ordinate 126 des in Fig. 15 gezeigten Diagramms ist die Spannung aufgetragen, die an den Aktor 34 angelegt wird. In das in Fig. 15 gezeigt Diagramm ist ein Verlauf 128 eingetragen, welcher die Spannung, mit welcher der Aktor 34 versorgt wird, über der Zeit veranschaulicht. Somit ist der Verlauf 128 ein zeitlicher Verlauf der Spannung, die an den Aktor 34 angelegt wird. In Fig. 15 ist eine erste Zeitspanne mit P1 bezeichnet, in welcher der Pumpbetrieb stattfindet. Außerdem ist in Fig. 15 eine sich an die erste Zeitspanne P1 anschließende zweite Zeitspanne P2 gezeigt, in welcher die Aktorvorrichtung 10 sich in ihrem Haltebetrieb beziehungsweise in ihrem Haltezustand befindet. Außerdem ist in Fig. 15 eine sich an die zweite Zeitspanne P2 anschließende dritte Zeitspanne P3 gezeigt, während welcher sich die Aktorvorrichtung 10 in ihrem Öffnungsbetrieb befindet. Aus Fig. 15 ist erkennbar, dass zum Pumpen des Fluids in die Abtriebskammer 18 die Spannung als Wechselspannung schnell aufeinanderfolgend und abwechselnd erhöht und verringert wird. Daraufhin wird die Spannung zumindest im Wesentlichen konstant gehalten, um das Abtriebselement 12 in der Haltestellung zu halten. Um eine Bewegung des Abtriebselements 12 aus der Haltestellung in die Ausweichstellung zuzulassen beziehungsweise zu bewirken, wird die Spannung, mit welcher der Aktor 34 versorgt wird, während der Zeitspanne P3, insbesondere langsam, verringert, um dadurch das Öffnung der Ventileinrichtung 76 zu bewirken.

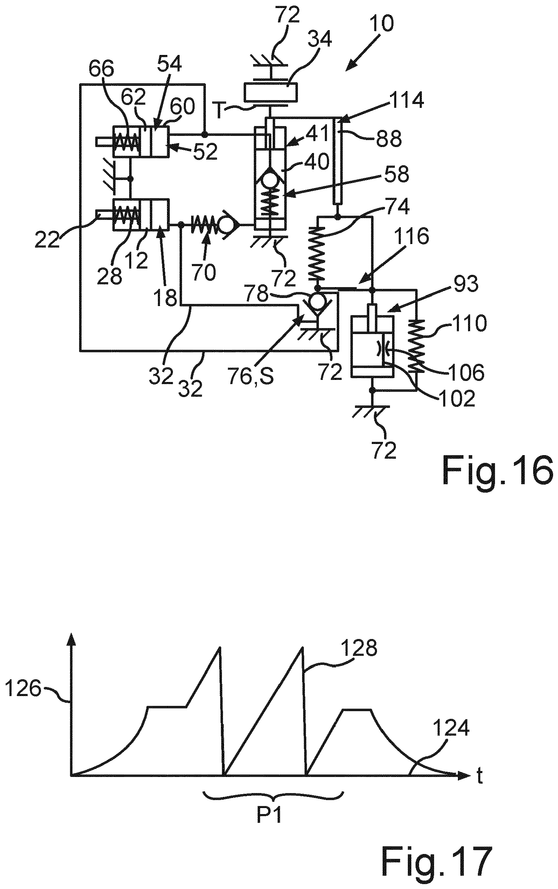

Fig. 16 zeigt eine schematische Darstellung einer fünften Ausführungsform der Aktorvorrichtung 10. Bei der fünften Ausführungsform ist die Dämpfereinrichtung nicht etwa als nicht-linearer Dämpfer, sondern als linearer Dämpfer 93 ausgebildet. Dies bedeutet, dass die Druckstufe und die Zugstufe des Dämpfers 93 gleich stark beziehungsweise gleich steif sind, sodass beispielsweise die Druckstufe und die Zugstufe des Dämpfers 93 gleiche Dämpfungskonstanten aufweisen. Im Übrigen entspricht die fünfte Ausführungsform der vierten Ausführungsform.

Fig. 17 zeigt das Diagramm gemäß Fig. 15, wobei nun jedoch gegenüber Fig. 15 beziehungsweise gegenüber der vierten Ausführungsform - wie anhand des Verlaufs 128 erkennbar ist - der Aktor 34 auf anderen Weise angesteuert wird. Durch die in Fig. 17 veranschaulichte Ansteuerung des Aktors 34 können der Pumpbetrieb, der Haltebetrieb und der Öffnungsbetrieb ohne Verwendung des nicht-linearen Dämpfers 92 und insbesondere unter Verwendung des linearen Dämpfers 93 realisiert werden. Hierzu wird - wie anhand des Verlaufs 128 in Fig. 17 erkennbar ist - während des dynamischen Pumpbetriebs langsamer erhöht als sie verringert wird beziehungsweise wesentlich schneller verringert als sie erhöht wird. Hierdurch wird dem Federelement 110 keine ausreichende Zeit gelassen, um ein Öffnen der Ventileinrichtung 76 zu bewirken. Somit wird auch bei der fünften Ausführungsform, insbesondere einzig und allein durch die Ansteuerung, die Ventileinrichtung 76, insbesondere mittels des linearen Dämpfers 93, geschlossen gehalten, während im Rahmen des Pumpbetriebs die Spannung, mit welcher der Aktor 34 versorgt wird, verringert wird, um neues Fluid in die Förderkammer 46 zu fördern, insbesondere zu saugen. Es ist erkennbar, dass die Ansteuerung, insbesondere bei der ersten Ausführungsform, zumindest im Wesentlichen sinusförmig erfolgt. Die Ansteuerung, insbesondere bei der fünften Ausführungsform, erfolgt beispielsweise sägezahnförmig, könnte jedoch auch alternativ pulsweitenmoduliert oder sinusförmig erfolgen.

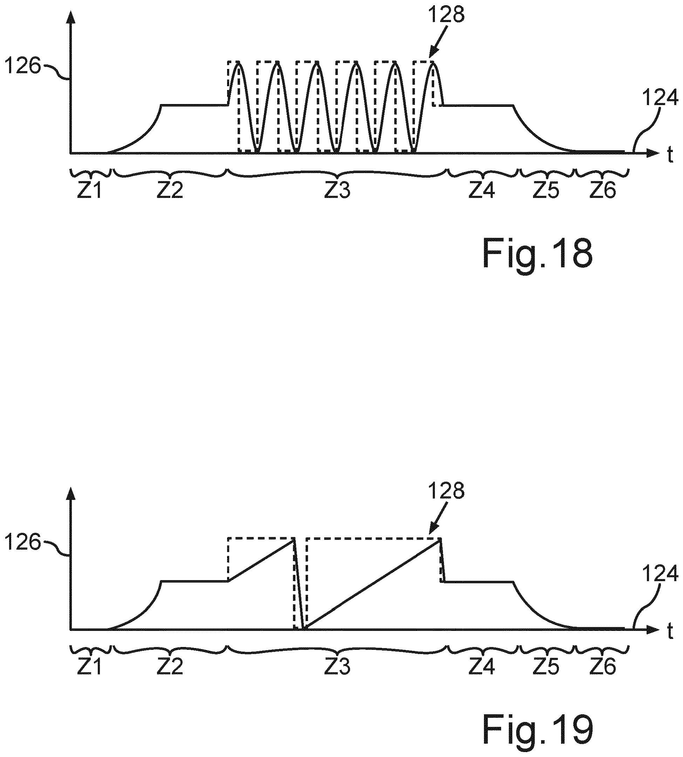

Fig. 18 und 19 zeigen ebenfalls das Diagramm gemäß Fig. 17, nun jedoch mit weiteren, durch Verläufe 128 veranschaulichten Ansteuerungen des Aktors 34. Während einer ersten Zeitspanne Z1 ist die Ventileinrichtung 76 geöffnet, und der Aktor 34 wird nicht mit einer elektrischen Spannung versorgt, sodass beispielsweise der Teil T seine minimale Auslenkung einnimmt. Während einer sich an die erste Zeitspanne Z1 anschließenden zweiten Zeitspanne Z2 wir die Spannung, mit welcher der Aktor 34 versorgt wird, zunächst, insbesondere langsam, erhöht und dann zumindest im Wesentlichen konstant gehalten, wodurch der Teil T relativ zu dem Basiselement 72 in die erste Richtung, insbesondere in eine Stellung, bewegt und die Ventileinrichtung 76 geschlossen wird und der Teil T in der genannten Stellung gehalten wird und die Ventileinrichtung 76 geschlossen gehalten wird. Während einer sich an die Zeitspanne Z2 anschließenden dritten Zeitspanne Z3 erfolgt der zuvor beschriebenen Pumpbetrieb, in dessen Rahmen der Teil T und mit diesem das Förderelement 40 in die erste Richtung und in die zweite Richtung relativ zu dem Basiselement 72 bewegt werden. Während einer sich an die Zeitspanne Z3 anschließenden Zeitspanne Z4 erfolgt der Haltebetrieb, während welchem der Aktor 34 mit einer zumindest im Wesentlichen konstanten Spannung versorgt wird. Dadurch wird die Ventileinrichtung 76 geschlossen gehalten und das Abtriebselement 12 wird in der Haltestellung gehalten. Während einer sich zeitlich an die Zeitspanne Z4 anschließenden Zeitspanne Z5 erfolgt der Öffnungsbetrieb in beziehungsweise während welchem die Spannung, mit welcher der Aktor 34 versorgt wird, abgebaut beziehungsweise verringert wird, insbesondere hinreichend langsam, sodass ein Öffnen der Ventileinrichtung 76, insbesondere mittels des Federelements 110 zugelassen beziehungsweise bewirkt wird. An die Zeitspanne Z5 schließt sich eine Zeitspanne Z6 an, während welcher die Ventileinrichtung 76, die beispielsweise während der Zeitspanne Z1, wieder geöffnet ist. Entsprechendes gilt für Fig. 19.

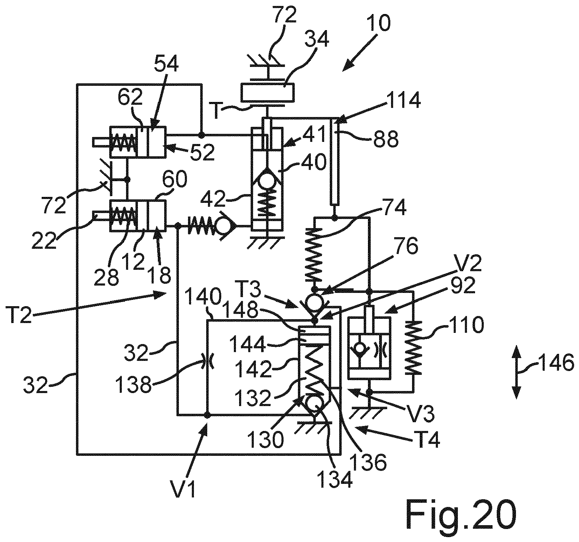

Schließlich zeigt Fig. 20 eine sechste Ausführungsform der Aktorvorrichtung 10. Die Aktorvorrichtung 10 weist dabei insbesondere ein zusätzlich zu der Ventileinrichtung 76 vorgesehenes Servoventil 130 auf, welches auch als Servo-Ablassventil bezeichnet wird und beispielsweise elektrisch betreibbar ist. Beispielsweise ist das Servoventil 130 in dem Abführkanal 32 in Reihe zu der Ventileinrichtung 76 angeordnet beziehungsweise geschaltet, wobei beispielsweise das Servoventil 130 in Strömungsrichtung des von der Abtriebskammer 18 über das Servoventil 130 und über die Ventileinrichtung 76 in die Reservoirkammer 54 strömenden Fluids stromauf der Ventileinrichtung 76 angeordnet ist. Das Servoventil 130 kann beispielsweise seinerseits elektrisch, zwischen einem zweiten Offenzustand und einem zweiten Schließzustand umgeschaltet werden. Insbesondere kann beispielsweise das Servoventil 130 zumindest aus dem zweiten Schließzustand in den zweiten Offenzustand umgeschaltet werden. Hierdurch kann beispielsweise der Abführkanal 32 besonders schnell freigegeben werden. Insbesondere kann hierdurch beispielsweise besonders schnell eine Vorkammer 132, insbesondere des Servoventils 130, geöffnet beziehungsweise freigegeben werden, sodass zumindest ein Teil des in der Abtriebskammer 18 aufgenommenen Fluids durch Schalten des Servoventils 130 in die zweite Öffnungsstellung in die Vorkammer 132 abgelassen und somit aus der Abtriebskammer 18 abgeführt beziehungsweise von dem Abtriebselement 12 abgeführt werden kann. Die Ventileinrichtung 76 wird bei der sechsten Ausführungsform wie auch bei allen anderen Ausführungsformen mittels des Aktors 34 betrieben, insbesondere gesteuert oder geregelt.

Das Servoventil 130 weist ein Ventilelement 134 und eine Ventilfeder 136 auf, welche beispielsweise einen geringen Öffnungsdruck von beispielsweise 1 bar aufweist. Weist beispielsweise das über den Abführkanal 32 auf das Ventilelement 134 wirkende Fluid einen Druck auf, welcher geringer als der Öffnungsdruck ist, so wird das Ventilelement 134 mittels der Ventilfeder 136 geschlossen gehalten. Entspricht der Druck des auf das Ventilelement 134 wirkenden Fluids dem Öffnungsdruck oder ist der Druck des auf das Ventilelement 134 wirkenden Fluids größer als der Öffnungsdruck, so wird in der Folge das Ventilelement 134 entgegen der Ventilfeder 136 geöffnet, wodurch das Servoventil 130 den Abführkanal 32 beziehungsweise die Vorkammer 132 freigibt. Mit anderen Worten, der Abführkanal 32 weist einen Kanalteil T2 auf, welcher in Strömungsrichtung des von der Abtriebskammer 18 zu der Ventileinrichtung 76 beziehungsweise zu dem Servoventil 130 strömenden Fluids stromab der Abtriebskammer 18 und stromauf der Vorkammer 132 angeordnet ist. In dem zweiten Schließzustand ist mittels des Ventilelements 134 der Kanalteil T2 fluidisch von der Vorkammer 132 getrennt, sodass das Fluid aus der Abtriebskammer 18 nicht in die Vorkammer 132 strömen kann. Durch Verstellen des Servoventils 130 aus dem zweiten Schließzustand in den zweiten Öffnungszustand gibt das Ventilelement 134 eine fluidische Verbindung zwischen dem Kanalteil T2 und der Vorkammer 132 frei. Mit anderen Worten wird die Vorkammer 132 freigegeben beziehungsweise fluidisch mit dem Kanalteil T2 verbunden, sodass über den Kanalteil T2 zumindest ein Teil des zunächst in der Abtriebskammer 18 aufgenommenen Fluids aus der Abtriebskammer 18 ausströmen und in die Vorkammer 132 einströmen kann. Dies erfolgt insbesondere dann, wenn der Druck des in dem Kanalteil T2 aufgenommenen und, insbesondere direkt, auf das Ventilelement 134 wirkenden Fluids dem Öffnungsdruck entspricht oder größer als der Öffnungsdruck ist.

Dem Servoventil 130 ist eine Drossel 138 zugeordnet, welche parallel zu dem Servoventil 130, insbesondere zu der Vorkammer 132 und zu dem Ventilelement 134 angeordnet beziehungsweise geschaltet ist. Die Drossel 138 ist in einem Kurzschlusskanal 140 angeordnet, welche an jeweiligen Verbindungsstellen V1 fluidisch mit dem Kanalteil T2 und an einer Verbindungsstelle V2 fluidisch mit einem weiteren Kanalteil T3 des Abführkanals 32 verbunden ist. Dabei kann beispielsweise der Kurzschlusskanal 140 Bestandteil des Abführkanals 32 sein. Die Verbindungsstelle V1 ist in Strömungsrichtung des von beziehungsweise aus der Abtriebskammer 18 durch den Kanalteil T2 zu dem Servoventil 130 und über das Servoventil 130 zu der Ventileinrichtung 76 strömenden Fluids stromauf des Ventilelements 134 angeordnet, wobei die Verbindungsstelle V2 bezogen auf die zuvor genannte Strömungsrichtung stromab des Servoventils 130, insbesondere des Ventilelements 134 und stromauf der Ventileinrichtung 76 angeordnet ist. Das den Kurzschlusskanal 140 durchströmende Fluid umgeht das Servoventil 130 und strömt somit nicht durch das Servoventil 130, sondern strömt durch den Kurzschlusskanal 140 unter Umgehung des Servoventils 130 zu der Ventileinrichtung 76. In Strömungsrichtung des von der Abtriebskammer 18 zu der Reservoirkammer 54 strömenden Fluids ist stromab der Ventileinrichtung 76 ein dritter Kanalteil T4 des Abführkanals 32 angeordnet, sodass das von der Ventileinrichtung 76 kommende Fluid mittels des Kanalteils T4 zu der Reservoirkammer 54 geleitet wird.

Das Servoventil 130 weist dabei ein Ventilgehäuse 142 auf, in welchem ein Ventilkolben 144 des Servoventils 130 translatorisch bewegbar aufgenommen ist. Der Ventilkolben 144 kann sich dabei entlang einer in Fig. 20 durch einen Doppelpfeil 146 veranschaulichten Kolbenrichtung relativ zu dem Ventilgehäuse 142 translatorisch bewegen. Dabei ist die Ventilfeder 136 entlang der Kolbenrichtung einerseits zumindest mittelbar, insbesondere direkt, an dem Ventilkolben 144 und andererseits zumindest mittelbar, insbesondere direkt, an dem Ventilelement 134 abgestützt. Dabei ist die Vorkammer 132 teilweise durch das Ventilgehäuse 142 und teilweise durch den Ventilkolben 144 gebildet beziehungsweise begrenzt. Außerdem weist das Servoventil 130 eine weitere Ventilkammer 148 auf, welche beispielsweise, insbesondere entlang der Kolbenrichtung, der Vorkammer 132 gegenüberliegt. Dabei ist der einerseits mit der Ventileinrichtung 76 und andererseits mit der Reservoirkammer 54 fluidisch verbundene Kanalteil T4 an einer Verbindungsstelle V3 fluidisch mit der Vorkammer 132 verbunden, wobei die Verbindungsstelle V3 in Strömungsrichtung des von der Ventileinrichtung 76 kommenden und zu der Reservoirkammer 54 strömenden Fluids stromab der Ventileinrichtung 76 und stromauf der Reservoirkammer 54 angeordnet ist. Wird der Ventilkolben 144 entsprechend relativ zu dem Ventilgehäuse 142 bewegt, sodass es zu einer Volumenverkleinerung der Vorkammer 132 kommt, so kommt es in gleichem Maße zu einer Volumenvergrößerung der Ventilkammer 148 und umgekehrt.

Insgesamt ist erkennbar, dass die Ventileinrichtung 76 bei der sechsten Ausführungsform wie auch bei den anderen Ausführungsformen mittels des Aktors 34 betrieben, insbesondere gesteuert oder geregelt wird, insbesondere im Hinblick auf das Öffnen und Schließen der Ventileinrichtung 76. Das Ventilelement 134 wird insbesondere dann, wenn der Druck des auf das Ventilelement 134 wirkenden Fluids, insbesondere in dem Kanalteil T2, kleiner als der Öffnungsdruck ist, leicht geschlossen gehalten. Wird die Ventileinrichtung 76 - wie zuvor beschrieben - mittels des Aktors 34 beziehungsweise durch entsprechendes Ansteuern des Aktors 34 geschlossen und wird anschließend der Pumpbetrieb durchgeführt, baut sich aufgrund der Drossel ein kleiner Druckunterschied auf der Abtriebsseite beispielsweise zwischen der Vorkammer 130 und der Ventilkammer 148 auf, jedoch bleibt das Ventilelement 134 aufgrund der Ventilfeder 136, insbesondere aufgrund einer von der Ventilfeder 136 bereitgestellten und auf das Ventilelement 134 wirkenden Federkraft, geschlossen. Dies kann auch über unterschiedliche hydraulische Querschnitte realisiert werden.

Wird die Ventileinrichtung 76 durch entsprechendes Ansteuern des Aktors 34 geöffnet, baut sich der Druck in der Ventilkammer 148 über die Ventileinrichtung 76 schneller ab als im Kanalteil T2, insbesondere aufgrund dessen, dass die Drossel 138 in dem Kurzschlusskanal 140 angeordnet ist. In der Folge wird das Ventilelement 134 geöffnet beziehungsweise das Servoventil 130 wird aus dem zweiten Schließzustand in den zweiten Offenzustand verstellt. Im Gegensatz beziehungsweise im Vergleich zur Ventileinrichtung 76 an sich kann das Servoventil 130 beziehungsweise das Ventilelement 134 deutlich größere Auslenkung realisieren, sodass Fluide mit einer hohen Viskosität besonders schnell abfließen können, das heißt aus der Abtriebskammer 18 abgeführt werden können.

**Patentansprüche**

1. Aktorvorrichtung (10), mit:

    - wenigstens einem Abtriebselement (12), welches mit einem Fluid beaufschlagbar und dadurch in wenigstens eine Haltestellung bewegbar ist,
    - einem Aktor (34), welcher durch Ansteuern des Aktors (34) in einem Pumpbetrieb betreibbar ist, in welchem zumindest ein Teil (T) des Aktors (34) durch das Ansteuern des Aktors (34) abwechselnd in eine erste Richtung (36) und in eine der ersten Richtung (36) entgegengesetzte zweite Richtung (38) bewegbar ist, wodurch zum Beaufschlagen des Abtriebselements (12) mit dem Fluid das Fluid zu dem Abtriebselement (12) förderbar ist,

- wenigstens einem Abführkanal (32), über welchen das Fluid von dem Abtriebselement (12) abführbar ist,

- einer Ventileinrichtung (76), welche zwei Ventilelemente (78, 80) aufweist, die relativ zueinander bewegbar sind, wodurch die Ventileinrichtung (76) zwischen wenigstens einem den Abführkanal (32) versperrenden Schließzustand (S), in welchem unter Versperren des Abführkanals (32) das Abtriebselement (12) durch das Fluid in der Haltestellung zu halten ist, und wenigstens einem den Abführkanal (32) freigebenden Offenzustand (O) verstellbar ist, in welchem die Ventilelemente (78, 80) ein Abführen des Fluids von dem Abtriebselement (12) über den Abführkanal (32) und dadurch eine Bewegung des Abtriebselements (12) aus der Haltestellung in wenigstens eine Ausweichstellung zulassen, wobei:

o durch Bewegen des Teils (T) des Aktors (34) in die erste Richtung (36) ein erstes der Ventilelemente (78, 80) in eine erste Betätigungsrichtung (36) bewegbar und dadurch auf das zweite Ventilelement (80) zubewegbar ist, wodurch die Ventileinrichtung (76) in den Schließzustand (S) verstellbar ist,

o die Aktorvorrichtung (10) dazu ausgebildet ist, in dem Pumpbetrieb den Teil (T) des Aktors (34) abwechselnd in die erste Richtung (36) und in die zweite Richtung (38) derart zu bewegen, dass in dem Pumpbetrieb nach einem Verstellen der Ventileinrichtung (76) in den Schließzustand (S) die Ventileinrichtung (76) trotz des in dem Pumpbetrieb stattfindenden, abwechselnden Bewegens des Teils (T) in die erste Richtung (36) und in die zweite Richtung (38) in dem Schließzustand (S) verbleibt, wodurch in dem Pumpbetrieb das Fluid zu dem Abtriebselement (12) förderbar ist, und

o die Aktorvorrichtung (10) in einem von dem Pumpbetrieb unterschiedlichen und sich an den Pumpbetrieb anschließenden Öffnungsbetrieb betreibbar ist, in welchem eine in die zweite Richtung (38) erfolgende Bewegung des Teils (T) des Aktors (34) zu einer in die zweite Betätigungsrichtung (38) und von dem zweiten Ventilelement (80)

weg verlaufenden Bewegung des ersten Ventilelements (78) und

dadurch zu einem Verstellen der Ventileinrichtung (76) aus dem Schließzustand (S) in den Offenzustand (O) führt, **dadurch gekennzeichnet, dass** durch Bewegen des Teils (T) in die zweite Richtung (38) eine Bewegung des ersten Ventilelements (78) in eine der ersten Betätigungsrichtung (36) entgegengesetzte zweite Betätigungsrichtung (38) von dem zweiten Ventilelement (80) weg bewirkbar ist, wodurch die Ventileinrichtung (76) in den Offenzustand (O) verstellbar ist.

**2.** Aktorvorrichtung (10) nach Anspruch 1 oder 2, **gekennzeichnet durch** eine Dämpfereinrichtung (92, 93), welche bei einer zum Beginnen des Pumpbetriebs vorgesehenen Bewegung des Teils (T) in die erste Richtung (36) eine Bewegung des ersten Ventilelements (78) in die erste Betätigungsrichtung (36) auf das zweite Ventilelement (80) zu und dadurch das Verstellen der Ventileinrichtung (76) aus dem Offenzustand (O) in den Schließzustand (S) zulässt und bei einer darauffolgenden Bewegung des Teils (T) in die zweite Richtung (38) eine ein Verstellen der Ventileinrichtung (76) in den Offenzustand (O) bewirkende Bewegung des ersten Ventilelements (80) in die zweite Betätigungsrichtung (38) von dem zweiten Ventilelement (80) weg verhindert und dadurch die Ventileinrichtung (76) in dem Schließzustand (S) hält, wodurch in dem Pumpbetrieb der Teil (T) des Aktors (34) abwechselnd in die erste Richtung (36) und in die zweite Richtung (38) bewegbar ist, während die Ventileinrichtung (76) in dem Schließzustand (S) verbleibt.

**3.** Aktorvorrichtung (10) nach Anspruch 2, **dadurch gekennzeichnet, dass** dadurch, dass die Dämpfereinrichtung (92, 93) in dem Pumpbetrieb eine ein Verstellen der Ventileinrichtung (76) in den Offenzustand (O) bewirkende Bewegung des ersten Ventilelements (78) in die zweite Betätigungsrichtung (38) von dem zweiten Ventilelement (80) weg verhindert und dadurch die Ventileinrichtung (76) in dem Schließzustand (S) hält, der Teil (T) des Aktors (34) und dadurch die Ventilelemente (78, 80) abwechselnd in die erste Betätigungsrichtung (36) und in die zweite Betätigungsrichtung (38) bewegbar sind, während die Ventileinrichtung (76) in dem Schließzustand (S) verbleibt.

**4.** Aktorvorrichtung (10) nach Anspruch 2 oder 3, **dadurch gekennzeichnet, dass** die Dämpfereinrichtung (92, 93) dazu ausgebildet ist, in dem Öffnungsbetrieb eine entlang der ersten Betätigungsrichtung (36) und/oder entlang der zweiten Betätigungsrichtung (38) erfolgende und eine Verstellung der Ventileinrichtung (76) aus dem Schließzustand (S) in den Offenzustand (O) bewirkende Relativbewegung zwischen den Ventilelementen (78. 80) zuzulassen.

**5.** Aktorvorrichtung (10) nach einem der Ansprüche 2 bis 4,
**gekennzeichnet durch**
wenigstens einen Anschlag (72), wobei die Ventilelemente (78, 80) und der Teil (T) des Aktors (34) entlang der ersten Richtung (36) und entlang der zweiten Richtung (38) relativ zu dem Anschlag (72) bewegbar sind.

**6.** Aktorvorrichtung (10) nach einem der Ansprüche 2 bis 5,
**dadurch gekennzeichnet, dass**
die Dämpfereinrichtung (92, 93) ein mit dem ersten Ventilelement (78) mitbewegbares erstes Dämpferelement (94) und ein relativ zu dem ersten Dämpferelement (94), insbesondere translatorisch, bewegbares zweites Dämpferelement (96) aufweist, wobei die Dämpferelemente (94, 96) bei einer durch Bewegen des Teils (T) in die erste Richtung (36) bewirkten, zum Verstellen der Ventileinrichtung (76) aus dem Offenzustand (O) in den Schließzustand (S) und zum Beginnen des Pumpbetriebs vorgesehenen Bewegung des ersten Ventilelements (78) in die erste Betätigungsrichtung (36) auf das zweite Ventilelement (80) zu relativ zueinander bewegbar sind.

**7.** Aktorvorrichtung (10) nach den Ansprüchen 5 und 6,
**dadurch gekennzeichnet, dass**
das erste Dämpferelemente (94, 96) in die erste Richtung (36) und in die zweite Richtung (38) relativ zu dem Anschlag (72) bewegbar sind, wobei mittels des Anschlags (72) eine Bewegung des zweiten Dämpferelements (96) in die zweite Richtung (38) begrenzbar ist, sodass bei der durch das Bewegen des Teils (T) in die erste Richtung (36) bewirkten und zum Verstellen der Ventileinrichtung (76) aus dem Offenzustand (O) in den Schließzustand (S) und zum Beginnen des Pumpbetriebs vorgesehenen Bewegung des ersten Ventilelements (78) in die erste Betätigungsrichtung (36) auf das zweite Ventilelement (80) zu das erste Dämpferelement (94) in die erste Richtung (36) relativ zu dem zweiten Dämpferelement (96) bewegbar ist, während eine Bewegung des zweiten Dämpferelements (96) in die erste Richtung (36) unterbleibt.

**8.** Aktorvorrichtung (10) nach Anspruch 6 oder 7,
**gekennzeichnet durch**
ein Rückstellelement (110), mittels welchem die Dämpferelemente (94, 96) entlang der ersten Richtung (36) und/oder entlang der zweiten Richtung (38) relativ zueinander bewegbar sind, wodurch mittels des Rückstellelements (110) eine entlang der ersten Betätigungsrichtung (36) und/oder der zweiten Betätigungsrichtung (38) verlaufende und eine Verstellung der Ventileinrichtung (76) aus dem Schließzustand (S) in den Offenzustand (O) bewirkende Relativbewegung zwischen den Ventilelementen (78, 80) bewirkbar ist.

**9.** Aktorvorrichtung (10) nach Anspruch 8,
**dadurch gekennzeichnet, dass**
das Rückstellelement (110) einerseits mit dem ersten Dämpferelement (94) und andererseits mit dem zweiten Dämpferelement (96) gekoppelt ist.

**10.** Aktorvorrichtung (10) nach einem der Ansprüche 6 bis 9,
**dadurch gekennzeichnet, dass**
die Dämpferelemente (94, 96) zwei Dämpferkammern (98, 100) begrenzen, in welchen jeweils ein Dämpfungsmedium aufgenommen ist, das in die Dämpferkammern (98, 100) einleitbar und aus den Dämpferkammern (98, 100) ausleitbar ist.

**11.** Aktorvorrichtung (10) nach Anspruch 10,
**dadurch gekennzeichnet, dass**
das Dämpfermedium das Fluid ist.

**12.** Aktorvorrichtung (10) nach einem der vorhergehenden Ansprüche,
**gekennzeichnet durch**
ein Antriebselement (41), welches ein erstes Antriebsteil (40), ein zweites Antriebsteil (42) und wenigstens eine durch die Antriebsteile (40, 42) begrenzte Antriebskammer (46) aufweist, wobei in dem Pumpbetrieb das erste Antriebsteil (40) abwechselnd in die erste Richtung (36) und in die zweite Richtung (38) relativ zu dem zweiten Antriebsteil (42) mittels des Teils (T) des Aktors (34), insbesondere mit dem zweiten Ventilelement (80) mit, bewegbar ist, wodurch das Fluid aus der Antriebskammer (46) heraus zu dem Abtriebselement (12) förderbar und in die Antriebskammer (46) hineinförderbar ist.

**13.** Aktorvorrichtung (10) nach Anspruch 12,
**gekennzeichnet durch**
ein Rückschlagventil (58), über welches das Fluid in die Antriebskammer (46) einleitbar ist.

**14.** Aktorvorrichtung (10) nach Anspruch 12 oder 13,
**gekennzeichnet durch**
eine Rückstelleinrichtung (74), mittels welcher das erste Antriebsteil (40) und
vorzugsweise das zweite Ventilelement (80) in die zweite Richtung (38) relativ zu dem zweiten Antriebsteil (42) bewegbar sind.

**15.** Verfahren zum Betreiben einer Aktorvorrichtung (10), welche aufweist:

- wenigstens ein Abtriebselement (12), welches mit einem Fluid beaufschlagbar und dadurch in wenigstens eine Haltestellung bewegbar ist,
- einen Aktor (34), welcher angesteuert und dadurch in einem Pumpbetrieb betrieben wird, in welchem zumindest ein Teil (T) des Aktors (34) durch das Ansteuern des Aktors (34) abwechselnd in eine erste Richtung (36) und in eine der ersten Richtung (36) entgegengesetzte zweite Richtung (38) bewegt wird, wodurch zum Beaufschlagen des Abtriebselements (12) mit dem Fluid das Fluid zu dem Abtriebselement (12) gefördert wird,
- wenigstens einen Abführkanal (32), über welchen das Fluid von dem Abtriebselement (12) abführbar ist,
- eine Ventileinrichtung (76), welche zwei Ventilelemente (78, 80) aufweist, die relativ zueinander bewegbar sind, wodurch die Ventileinrichtung (76) zwischen wenigstens einem den Abführkanal (32) versperrenden Schließzustand (S), in welchem unter Versperren des Abführkanals (32) das Abtriebselement (12) durch das Fluid in der Haltestellung zu halten ist, und wenigstens einem den Abführkanal (32) freigebenden Offenzustand (O) verstellbar ist, in welchem die Ventilelemente (78, 80) ein Abführen des Fluids von dem Abtriebselement (12) über den Abführkanal (32) und dadurch eine Bewegung des Abtriebselements (12) aus der Haltestellung in wenigstens eine Ausweichstellung zulassen, wobei:

    o durch Bewegen des Teils (T) des Aktors (34) in die erste Richtung (36) ein erstes der Ventilelemente (78, 80) in eine erste Betätigungsrichtung (36) bewegbar und dadurch auf das zweite Ventilelement (80) zubewegbar ist, wodurch die Ventileinrichtung (76) in den Schließzustand (S) verstellbar ist,

    o die Aktorvorrichtung (10) in dem Pumpbetrieb den Teil (T) des Aktors (34) abwechselnd in die erste Richtung (36) und in die zweite Richtung (38) derart bewegt, dass in dem Pumpbetrieb nach einem Verstellen der Ventileinrichtung (76) in den Schließzustand (S) die Ventileinrichtung (76) trotz des in dem Pumpbetrieb stattfindenden, abwechselnden Bewegens des Teils (T) in die erste Richtung (36) und in die zweite Richtung (38) in dem Schließzustand (S) verbleibt, wodurch in dem Pumpbetrieb das Fluid zu dem Abtriebselement (12) gefördert wird, und

    o die Aktorvorrichtung (10) in einem von dem Pumpbetrieb unterschiedlichen und sich an den Pumpbetrieb anschließenden Öffnungsbetrieb betrieben wird, in welchem eine in die zweite Richtung (38) erfolgende Bewegung des Teils (T) des Aktors (34) zu einer in die zweite Betätigungsrichtung (38) und von dem zweiten Ventilelement (80) weg verlaufenden Bewegung des ersten Ventilelements (78) und

dadurch zu einem Verstellen der Ventileinrichtung (76) aus dem Schließzustand (S) in den Offenzustand (O) führt, **dadurch gekennzeichnet, dass** durch Bewegen des Teils (T) in die zweite Richtung (38) eine Bewegung des ersten Ventilelements (78) in eine der ersten Betätigungsrichtung (36) entgegengesetzte zweite Betätigungsrichtung (38) von dem zweiten Ventilelement (80) weg bewirkbar ist, wodurch die Ventileinrichtung (76) in den Offenzustand (O) verstellbar ist.

**Claims**

1. An actuator device (10) comprising:

    - at least one output element (12), which can be supplied with a fluid and is thereby movable into at least one retaining position;
    - an actuator (34), which is operable in a pumping operation by controlling the actuator (34), in which at least a part (T) of the actuator (34) is alternatingly movable in a first direction (36) and in a second direction (38) opposite to the first direction (36) by controlling the actuator (34), whereby the fluid is deliverable to the output element (12) for supplying the output element (12) with the fluid,
    - at least one discharge channel (32), via which the fluid can be discharged from the output element (12),
    - a valve device (76), which comprises two valve elements (78, 80), which are movable in relation to each other, whereby the valve device (76) is adjustable between at least one closed state (S) blocking the discharge channel (32), in which the output element (12) can be retained in the retaining position by the fluid while blocking the discharge channel (32), and at least one open state (O) unblocking the discharge channel (32), in which the valve elements (78, 80) allow discharge of the fluid from the output element (12) via the discharge channel (32) and thereby a movement of the output element (12) from the retaining position into at least one evasive position, wherein:

    ° by moving the part (T) of the actuator (34) in the first direction (36), a first one of the valve elements (78, 80) is movable in a first actuation direction (36) and thereby movable towards the second valve element (80), whereby the valve device (76) is adjustable into the closed state (S),

° the actuator device (10) is formed to alternatingly move the part (T) of the actuator (34) in the first direction (36) and in the second direction (38) in the pumping operation such that, in the pumping operation, the valve device (76) remains in the closed state (S) despite of the alternating movement of the part (T) in the first direction (36) and in the second direction (38) occurring in the pumping operation after adjusting the valve device (76) into the closed state (S), whereby the fluid is deliverable to the output element (12) in the pumping operation, and

° the actuator device (10) is operable in an opening operation different from the pumping operation and following the pumping operation, in which a movement of the part (T) of the actuator (34) effected in the second direction (38) results in a movement of the first valve element (78) proceeding in the second actuation direction (38) and away from the second valve element (80) and thereby in adjusting the valve device (76) from the closed state (S) into the open state (O),

**characterized in that** by moving the part (T) in the second direction (38), a movement of the first valve element (78) in a second actuation direction (38) opposite to the first actuation direction (36) away from the second valve element (80) can be effected, whereby the valve device (76) is adjustable into the open state (O).

2. The actuator device (10) according to claim 1 or 2, **characterized by**
a damper device (92, 93), which allows a movement of the first valve element (78) in the first actuation direction (36) towards the second valve element (80) and thereby the adjustment of the valve device (76) from the open state (O) into the closed state (S) upon a movement of the part (T) in the first direction (36) provided for beginning the pumping operation, and prevents a movement of the first valve element (80) in the second actuation direction (38) away from the second valve element (80) effecting an adjustment of the valve device (76) into the open state (O) upon a subsequent movement of the part (T) in the second direction (38), and thereby retains the valve device (76) in the closed state (S), whereby the part (T) of the actuator (34) is alternatingly movable in the first direction (36) and in the second direction (38) in the pumping operation, while the valve device (76) remains in the closed state (S).

3. The actuator device (10) according to claim 2, **characterized in that**
in that the damper device (92, 93) prevents a movement of the first valve element (78) in the second actuation direction (38) away from the second valve element (80) effecting an adjustment of the valve device (76) into the open state (O) in the pumping operation and thereby retains the valve device (76) in the closed state (S), the part (T) of the actuator (34) and thereby the valve elements (78, 80) are alternatingly movable in the first actuation direction (36) and in the second actuation direction (38), while the valve device (76) remains in the closed state (S).

4. The actuator device (10) according to claim 2 or 3, **characterized in that**
the damper device (92, 93) is formed to allow a relative movement between the valve elements (78, 80) effected along the first actuation direction (36) and/or along the second actuation direction (38) and causing an adjustment of the valve device (76) from the closed state (S) into the open state (O) in the opening operation.

5. The actuator device (10) according to any one of claims 2 to 4, **characterized by**
at least one stop (72), wherein the valve elements (78, 80) and the part (T) of the actuator (34) are movable in relation to the stop (72) along the first direction (36) and along the second direction (38).

6. The actuator device (10) according to any one of claims 2 to 5, **characterized in that**
the damper device (92, 93) comprises a first damper element (94) movable together with the first valve element (78) and a second damper element (96), in particular translationally, movable in relation to the first damper element (94), wherein the damper elements (94, 96) are movable in relation to each other upon a movement of the first valve element (78) in the first actuation direction (36) towards the second valve element (80) effected by moving the part (T) in the first direction (36), provided for adjusting the valve device (76) from the open state (O) into the closed state (S) and for beginning the pumping operation.

7. The actuator device (10) according to claims 5 and 6, **characterized in that**
the first damper elements (94, 96) are movable in the first direction (36) and in the second direction (38) in relation to the stop (72), wherein a movement of the second damper element (96) in the second direction (38) can be limited by means of the stop (72) such that the first damper element (94) is movable in the first direction (36) in relation to the second damper element (96) upon the movement of the first valve element (78) in the first actuation direction (36) towards the second valve element (80) effected by moving the part (T) in the first direction (36) and provided for adjusting the valve device (76) from the open state (O) into the closed state (S) and for beginning the pumping operation, while a movement of the second damper element (96) in the first direction (36) is omitted.

8. The actuator device (10) according to claim 6 or 7, **characterized by** a return element (110), by means of which the damper elements (94, 96) are movable in relation to each other along the first direction (36) and/or along the second direction (38), whereby a relative movement between the valve elements (78, 80) proceeding along the first actuation direction (36) and/or the second actuation direction (38) and effecting an adjustment of the valve device (76) from the closed state (S) into the open state (O) can be effected by means of the return element (110).

9. The actuator device (10) according to claim 8, **characterized in that** the return element (110) is coupled to the first damper element (94) on the one hand and to the second damper element (96) on the other hand.

10. The actuator device (10) according to any one of claims 6 to 9, **characterized in that** the damper elements (94, 96) delimit two damper chambers (98, 100), in which a damping medium is respectively accommodated, which can be introduced into the damper chambers (98, 100) and can be diverted out of the damper chambers (98, 100).

11. The actuator device (10) according to claim 10, **characterized in that** the damper medium is the fluid.

12. The actuator device (10) according to any one of the preceding claims, **characterized by** a drive element (41), which comprises a first drive part (40), a second drive part (42) and at least one drive chamber (46) delimited by the drive parts (40, 42), wherein the first drive part (40) is alternately movable in the first direction (36) and in the second direction (38) in relation to the second drive part (42) by means of the part (T) of the actuator (34), in particular together with the second valve element (80), in the pumping operation, whereby the fluid is deliverable out of the drive chamber (46) to the output element (12) and deliverable into the drive chamber (46).

13. The actuator device (10) according to claim 12, **characterized by** a check valve (58), via which the fluid can be introduced into the drive chamber (46).

14. The actuator device (10) according to claim 12 or 13, **characterized by** a return device (74), by means of which the first drive part (40) and preferably the second valve element (80) are movable in the second direction (38) in relation to the second drive part (42).

15. A method for operating an actuator device (10), which comprises:

- at least one output element (12), which can be supplied with a fluid and is thereby movable into at least one retaining position;
- an actuator (34), which is controlled and thereby operated in a pumping operation, in which at least a part (T) of the actuator (34) is alternately moved in a first direction (36) and in a second direction (38) opposite to the first direction (36) by controlling the actuator (34), whereby the fluid is delivered to the output element (12) for supplying the output element (12) with the fluid,
- at least one discharge channel (32), via which the fluid can be discharged from the output element (12),
- a valve device (76), which comprises two valve elements (78, 80), which are movable in relation to each other, whereby the valve device (76) is adjustable between at least one closed state (S) blocking the discharge channel (32), in which the output element (12) can be retained in the retaining position by the fluid while blocking the discharge channel (32), and at least one open state (O) unblocking the discharge channel (32), in which the valve elements (78, 80) allow discharge of the fluid from the output element (12) via the discharge channel (32) and thereby a movement of the output element (12) from the retaining position into at least one evasive position, wherein:

° by moving the part (T) of the actuator (34) in the first direction (36), a first one of the valve elements (78, 80) is movable in a first actuation direction (36) and thereby movable towards the second valve element (80), whereby the valve device (76) is adjustable into the closed state (S),

° the actuator device (10) alternately moves the part (T) of the actuator (34) in the first direction (36) and in the second direction (38) in the pumping operation such that, in the pumping operation, the valve device (76) remains in the closed state (S) despite of the alternating movement of the part (T) in the first direction (36) and in the second direction (38) occurring in the pumping operation after adjusting the valve device (76) into the closed state (S), whereby the fluid is delivered to the output element (12) in the pumping operation, and

° the actuator device (10) is operated in an opening operation different from the pumping operation and following the pumping operation, in which a movement of the part (T) of the actuator (34) effected in the second direction (38) results in a movement of the first valve element (78) proceeding in the second actuation direction (38) and away from the second valve element (80) and thereby in adjusting the valve device (76) from the closed state (S) into the open state (O),

**characterized in that** by moving the part (T) in the second direction (38), a movement of the first valve element (78) in a second actuation direction (38) opposite to the first actuation direction (36) away from the second valve element (80) can be effected, whereby the valve device (76) is adjustable into the open state (O).

## Revendications

1. Dispositif actionneur (10), comportant :

   - au moins un élément de sortie (12) pouvant être soumis à un fluide et être ainsi amené dans au moins une position de retenue,
   - un actionneur (34) pouvant fonctionner en commandant l'actionneur (34) dans un mode de pompage dans lequel au moins une partie (T) de l'actionneur (34) peut être déplacée en commandant l'actionneur (34) de manière alternée dans une première direction (36) et dans une seconde direction (38) opposée à la première direction (36), en sorte que le fluide peut être transféré vers l'élément de sortie (12) afin d'alimenter l'élément de sortie (12) en fluide,
   - au moins un canal d'évacuation (32) par lequel le fluide peut être évacué de l'élément de sortie (12),
   - un dispositif à clapet (76) comportant deux éléments de clapet (78, 80) mobiles l'un par rapport à l'autre, en sorte que le dispositif à clapet (76) peut être basculé entre au moins un état fermé (S) bloquant le canal d'évacuation (32), l'élément de sortie (12) devant être maintenu dans la position de retenue par le fluide en bloquant le canal d'évacuation (32), et au moins un état ouvert (O) libérant le canal d'évacuation (32), les éléments de clapet (78, 80) permettant une évacuation du fluide à partir de l'élément de sortie (12) via le canal d'évacuation (32) et ainsi un mouvement de l'élément de sortie (12) de la position de retenue jusqu'à au moins une position d'évitement, dans lequel :

   O en déplaçant la partie (T) de l'actionneur (34) dans la première direction (36), un premier des éléments de clapet (78, 80) est mobile dans une première direction d'actionnement (36) et est ainsi mobile vers le second élément de clapet (80), en sorte que le dispositif à clapet (76) peut être passé à l'état fermé (S),

   O le dispositif actionneur (10) est configuré pour déplacer, en mode de pompage, la partie (T) de l'actionneur (34) de manière alternée dans la première direction (36) et dans la seconde direction (38) de telle sorte qu'en mode de pompage, après le passage du dispositif à clapet (76) à l'état fermé (S), le dispositif à clapet (76) reste à l'état fermé (S) malgré le mouvement alternatif de la partie (T) dans la première direction (36) et dans la seconde direction (38) qui a lieu en mode de pompage, en sorte que le fluide peut être transféré vers l'élément de sortie (12) en mode de pompage, et

   O le dispositif actionneur (10) peut fonctionner dans un mode d'ouverture différent du mode de pompage et suivant le mode de pompage, mode d'ouverture dans lequel un mouvement dans la seconde direction (38) de la partie (T) de l'actionneur (34) entraîne un mouvement du premier élément de clapet (78) ayant lieu dans la seconde direction d'actionnement (38) et en l'éloignant du second élément de clapet (80) et ainsi un passage du dispositif à clapet (76) de l'état fermé (S) à l'état ouvert (O), **caractérisé en ce que** le mouvement de la partie (T) dans la seconde direction (38) permet de déplacer le premier élément de clapet (78) dans une seconde direction d'actionnement (38) opposée à la première direction d'actionnement (36) et en l'éloignant du second élément de clapet (80), en sorte que le dispositif à clapet (76) peut être passé à l'état ouvert (O).

2. Dispositif actionneur (10) selon la revendication 1 ou 2, **caractérisé par** un dispositif d'amortissement (92, 93) qui permet un mouvement du premier élément de clapet (78) dans la première direction d'actionnement (36) vers le second élément de clapet (80) et ainsi le passage du dispositif à clapet (76) de l'état ouvert (O) à l'état fermé (S) lors d'un mouvement de la partie (T) dans la première direction (36) destiné au lancement du mode de pompage, et empêche un mouvement du premier élément de clapet (80) dans la seconde direction d'actionnement (38) en l'éloignant du second élément de clapet (80) et entraînant un passage du dispositif à clapet (76) à l'état ouvert (O), et maintient ainsi le dispositif à clapet (76) à l'état fermé (S) lors d'un mouvement ultérieur de la partie (T) dans la seconde direction (38), en sorte qu'en mode de pompage, la partie (T) de l'actionneur (34) peut être déplacée de manière alternée dans la première direction (36) et dans la seconde direction (38), alors que le dispositif à clapet (76) reste à l'état fermé (S).

3. Dispositif actionneur (10) selon la revendication 2,
   **caractérisé en ce que**
   en mode de pompage, le dispositif d'amortissement (92, 93) empêche un mouvement du premier élément de clapet (78) dans la seconde direction d'actionnement (38) en l'éloignant du second élément de clapet (80) et entraînant un passage du dispositif à clapet (76) à l'état ouvert (O) et maintient ainsi le dispositif à clapet (76) à l'état fermé (S), la partie (T) de l'actionneur (34) et ainsi les éléments de clapet (78, 80) pouvant être déplacés de manière alternée dans la première direction d'actionnement (36) et dans la seconde direction d'actionnement (38), alors que le dispositif à clapet (76) reste à l'état fermé (S).

4. Dispositif actionneur (10) selon la revendication 2 ou 3,
   **caractérisé en ce que**
   le dispositif d'amortissement (92, 93) est configuré pour permettre, en mode d'ouverture, un mouvement relatif entre les éléments de clapet (78, 80) ayant lieu le long de la première direction d'actionnement (36) et/ou le long de la seconde direction d'actionnement (38) et entraînant un passage du dispositif à clapet (76) de l'état fermé (S) à l'état ouvert (O).

5. Dispositif actionneur (10) selon l'une des revendications 2 à 4,
   **caractérisé par**
   au moins une butée (72), les éléments de clapet (78, 80) et la partie (T) de l'actionneur (34) étant mobiles par rapport à la butée (72) le long de la première direction (36) et le long de la seconde direction (38).

6. Dispositif actionneur (10) selon l'une des revendications 2 à 5,
   **caractérisé en ce que**
   le dispositif d'amortissement (92, 93) comporte un premier élément d'amortissement (94) conjointement mobile avec le premier élément de clapet (78) et un second élément d'amortissement (96) mobile, en particulier en translation, par rapport au premier élément d'amortissement (94), les éléments d'amortissement (94, 96) étant mobiles l'un par rapport à l'autre lors d'un mouvement du premier élément de clapet (78) dans la première direction d'actionnement (36) vers le second élément de clapet (80), lequel mouvement étant réalisé en déplaçant la partie (T) dans la première direction (36) et destiné à faire passer le dispositif à clapet (76) de l'état ouvert (O) à l'état fermé (S) et à lancer le mode de pompage.

7. Dispositif actionneur (10) selon les revendications 5 et 6,
   **caractérisé en ce que**
   les premiers éléments d'amortissement (94, 96) sont mobiles dans la première direction (36) et dans la seconde direction (38) par rapport à la butée (72), un mouvement du second élément d'amortissement (96) dans la seconde direction (38) pouvant être limité au moyen de la butée (72), de sorte que lors du mouvement du premier élément de clapet (78) dans la première direction d'actionnement (36) vers le second élément de clapet (80) réalisé en déplaçant la partie (T) dans la première direction (36) et destiné à faire passer le dispositif à clapet (76) de l'état ouvert (O) à l'état fermé (S) et à lancer le mode de pompage, le premier élément d'amortissement (94) est mobile vers le second élément de clapet (80) dans la première direction (36) par rapport au second élément d'amortissement (96), alors qu'un mouvement du second élément d'amortissement (96) dans la première direction (36) n'est pas réalisé.

8. Dispositif actionneur (10) selon la revendication 6 ou 7,
   **caractérisé par**
   un élément de rappel (110) au moyen duquel les éléments d'amortissement (94, 96) peuvent être déplacés l'un par rapport à l'autre le long de la première direction (36) et/ou le long de la seconde direction (38), en sorte qu'un mouvement relatif entre les éléments de clapet (78, 80) s'étendant le long de la première direction d'actionnement (36) et/ou de la seconde direction d'actionnement (38) et entraînant un passage du dispositif à clapet (76) de l'état fermé (S) à l'état ouvert (O), peut être obtenu au moyen de l'élément de rappel (110).

9. Dispositif actionneur (10) selon la revendication 8,
   **caractérisé en ce que**
   l'élément de rappel (110) est couplé d'une part au premier élément d'amortissement (94) et d'autre part au second élément d'amortissement (96).

10. Dispositif actionneur (10) selon l'une des revendications 6 à 9,

**caractérisé en ce que**
les éléments d'amortissement (94, 96) délimitent deux chambres d'amortissement (98, 100) recevant chacune un milieu d'amortissement qui peut être introduit dans les chambres d'amortissement (98, 100) et être évacué des chambres d'amortissement (98, 100).

11. Dispositif d'actionneur (10) selon la revendication 10, **caractérisé en ce que** le milieu d'amortissement est le fluide.

12. Dispositif actionneur (10) selon l'une des revendications précédentes,
    **caractérisé par**
    un élément d'entraînement (41) qui comporte une première partie d'entraînement (40), une seconde partie d'entraînement (42) et au moins une chambre d'entraînement (46) délimitée par les parties d'entraînement (40, 42), la première partie d'entraînement (40) pouvant être, en mode de pompage, déplacée par rapport à la seconde partie d'entraînement (42) de manière alternée dans la première direction (36) et dans la seconde direction (38) au moyen de la partie (T) de l'actionneur (34), en particulier avec le second élément de clapet (80), en sorte que le fluide peut être transféré hors de la chambre d'entraînement (46) vers l'élément de sortie (12) et transféré dans la chambre d'entraînement (46).

13. Dispositif actionneur (10) selon la revendication 12,
    **caractérisé par**
    un clapet anti-retour (58) par l'intermédiaire duquel le fluide peut être introduit dans la chambre d'entraînement (46).

14. Dispositif actionneur (10) selon la revendication 12 ou 13,
    **caractérisé par**
    un dispositif de rappel (74) au moyen duquel la première partie d'entraînement (40) et de préférence le second élément de clapet (80) peuvent être déplacés par rapport à la seconde partie d'entraînement (42) dans la seconde direction (38).

15. Procédé pour faire fonctionner un dispositif actionneur (10) qui comporte :

    - au moins un élément de sortie (12) pouvant être soumis à un fluide et être ainsi amené dans au moins une position de retenue,
    - un actionneur (34) qui est commandé et fonctionne ainsi dans un mode de pompage, dans lequel au moins une partie (T) de l'actionneur (34) est déplacée en commandant l'actionneur (34) de manière alternée dans une première direction (36) et dans une seconde direction (38) opposée à la première direction (36), en sorte que le fluide est transféré vers l'élément de sortie (12) afin d'alimenter l'élément de sortie (12) en fluide,
    - au moins un canal d'évacuation (32) par lequel le fluide peut être évacué de l'élément de sortie (12),
    - un dispositif à clapet (76) comportant deux éléments de clapet (78, 80) mobiles l'un par rapport à l'autre, en sorte que le dispositif à clapet (76) peut être basculé entre au moins un état fermé (S) bloquant le canal d'évacuation (32), l'élément de sortie (12) devant être maintenu dans la position de retenue par le fluide en bloquant le canal d'évacuation (32), et au moins un état ouvert (O) libérant le canal d'évacuation (32), les éléments de clapet (78, 80) permettant une évacuation du fluide à partir de l'élément de sortie (12) via le canal d'évacuation (32) et ainsi un mouvement de l'élément de sortie (12) de la position de retenue jusqu'à au moins une position d'évitement, dans lequel :

    O en déplaçant la partie (T) de l'actionneur (34) dans la première direction (36), un premier des éléments de clapet (78, 80) est mobile dans une première direction d'actionnement (36) et est ainsi mobile vers le second élément de clapet (80), en sorte que le dispositif à clapet (76) peut être passé à l'état fermé (S),
    O le dispositif actionneur (10) déplace, en mode de pompage, la partie (T) de l'actionneur (34) de manière alternée dans la première direction (36) et dans la seconde direction (38) de telle sorte qu'en mode de pompage, après le passage du dispositif à clapet (76) à l'état fermé (S), le dispositif à clapet (76) reste à l'état fermé (S) malgré le mouvement alternatif de la partie (T) dans la première direction (36) et dans la seconde direction (38) qui a lieu en mode de pompage, en sorte que le fluide est transféré vers l'élément de sortie (12) en mode de pompage, et
    O le dispositif actionneur (10) fonctionne dans un mode d'ouverture différent du mode de pompage et suivant le mode de pompage, mode d'ouverture dans lequel un mouvement dans la seconde direction (38) de la partie (T) de l'actionneur (34) entraîne un mouvement du premier élément de clapet (78) ayant lieu dans la seconde direction d'actionnement (38) et en l'éloignant du second élément de clapet (80) et ainsi un passage du dispositif à clapet (76) de l'état fermé (S) à l'état ouvert (O), **caractérisé en ce que** le mouvement de la partie (T) dans la seconde direction (38) permet de déplacer le premier élément de clapet (78) dans une seconde direction d'actionnement (38) opposée à la première direction d'actionnement (36) et en l'éloignant du second élément de clapet (80), en sorte que le dispositif à clapet (76) peut être passé à l'état ouvert (O).

Fig.1

Fig.2

Fig.3

Fig.4

Fig.5

Fig.6

Fig.7

Fig.8

Fig.9

Fig.10

Fig.11

Fig.12

Fig.13

Fig.14

Fig.15

Fig.16

Fig.17

Fig.18

Fig.19

Fig.20